# EUROPÄISCHE PATENTSCHRIFT

(11) **EP 1 078 974 B1**
(45) Veröffentlichungstag und Bekanntmachung des Hinweises auf die Patenterteilung: **03.03.2004**
(21) Anmeldenummer: 00118521.4
(22) Anmeldetag: 25.08.2000
(51) Int. Cl.: C09K 19/00, C09B 67/00, C09D 5/36

(54) **Cholesterisches Schichtmaterial mit verbesserter Farbbeständigkeit und Verfahren zu dessen Herstellung**
Cholesteric layered material with improved colour stability and method for producing the same
Matériau multicouche cholestérique à stabilité de couleur améliorée et son procédé de fabrication

(30) Priorität: 27.08.1999 DE 19940681
(43) Veröffentlichungstag der Anmeldung: 28.02.2001
(73) Patentinhaber: BASF AKTIENGESELLSCHAFT, 67056 Ludwigshafen (DE)
(72) Erfinder: Prechtl, Frank, Dr., 60318 Frankfurt (DE); Schneider, Norbert, 67122 Altrip (DE); Meyer, Frank, Dr., 69115 Heidelberg (DE); Blaschka, Peter, 67069 Ludwigshafen (DE); Haremza, Sylke, Dr., 69151 Neckargemünd (DE); Hezel, Tilmann, Dr., 68163 Mannheim (DE); Parker, Robert, 68161 Mannheim (DE); Richter, Volker, 69118 Heidelberg (DE)
(74) Vertreter: Kinzebach, Werner, Dr.

(56) Entgegenhaltungen:
- EP-A- 0 724 005
- WO-A-99/11719
- DE-A- 4 240 743
- DE-A- 19 726 050
- DE-A- 19 739 263

## Beschreibung

Die Erfindung betrifft cholesterische Schichtmaterialien mit verbesserter Farbbeständigkeit, umfassend wenigstens eine dreidimensional vernetzte, orientierte cholesterische Schicht, Verfahren zu deren Herstellung und deren Verwendung.

Cholesterische Schichten, aus diesen hergestellte Pigmente sowie Zusammensetzungen, welche cholesterische Pigmente enthalten, finden vielfältige Verwendung, beispielsweise im Fahrzeug- oder Fahrzeugzubehörsektor, im EDV-, Freizeit-, Sport- und Spielsektor, als optische Bauelemente, wie Polarisatoren oder Filter, im Kosmetikbereich, im Textil-, Leder- oder Schmuckbereich, bei Geschenkartikeln, bei Schreibutensilien, oder auf Brillengestellen, im Bausektor, im Haushaltssektor, bei Druckerzeugnissen aller Art sowie bei der Herstellung von Lacken oder Farben, weiterhin zur fälschungserschwerenden Bearbeitung von Gegenständen, zur Beschichtung von Gebrauchsgegenständen oder zur Lackierung von Fahrzeugen.

Dabei müssen die cholesterischen Schichten sowie die Pigmente und diese enthaltende Zusammensetzungen eine Reihe von Bedingungen erfüllen, um für die vorgenannten Zwecke einsetzbar zu sein. Zum einen soll der Farbeindruck möglichst brillant sein, zum anderen soll der Farbeindruck möglichst weitgehend von äusseren Stimuli unabhängig sein, insbesondere soll er in einem weiten Temperaturund Druckbereich sowie gegenüber der Einwirkung von Lösungsmitteln stabil sein. Ausserdem sollen die cholesterischen Schichten möglichst dünn sein, so dass die aus ihnen hergestellten Pigmente eine möglichst geringe Dicke aufweisen, wodurch Kosten verringert, und die Anwendungen erleichtert werden.

Die EP-A 0887398 umgeht das Problem der Empfindlichkeit vernetzter cholesterischer Pigmente gegenüber Lösungsmitteln durch die Entwicklung einer speziellen Matrix, in der die vernetzten cholesterischen Pigmente, die nicht allgemein temperatur- und lösungsmittelstabil sind, eine verbesserte Stabilität zeigen.

Vielfach stellt sich beim Einsatz der aus dem Stand der Technik bekannten cholesterischen Schichten das Problem nicht ausreichender Farbbeständigkeit bei Einwirkung von Temperatur und/oder Lösungsmitteln. Deshalb lag der vorliegenden Erfindung die Aufgabe zugrunde, cholesterisches Schichtmaterial bereitzustellen, das ausreichende Farbbeständigkeit besitzt.

Die Aufgabe wurde überraschenderweise durch Bereitstellung eines cholesterischen Schichtmaterials gelöst, umfassend wenigstens eine dreidimensional vernetzte, orientierte cholesterische Schicht, wobei die vernetzte(n) cholesterische(n) Schicht(en) keinen visuell erkennbaren Farbshift zeigt (zeigen).

Cholesterische Schichtmaterialien welche dieses Stabilitätskriterium erfüllen, zeigen eine überlegene Farbstabilität unter Einwirkung von Temperatur und/oder Lösungsmittel. Gleiches gilt für die aus derartigen Schichtmaterialien abgeleiteten Produkte, wie z.B. Pigmente und Folien.

Die erfindungsgemässen Schichtmaterialien, und davon abgeleiteten Produkte zeichnen sich insbesondere dadurch aus, dass sie keinen visuell erkennbaren Farbshift zeigen bei:
a) Änderung der Temperatur des Schichtmaterials im Bereich von - 30°C bis +250°C, insbesondere 0 bis 250°C, oder 0 bis 200°C;
b) Erwärmen auf Temperaturen im Bereich von 80 bis 160°C oder 80 bis 130°C und gleichzeitiger Einwirkung eines Verdünnungsmittels, insbesondere eines organischen Verdünnungsmittels; und/oder
c) 15-minütiger Behandlung bei 80°C in Xylol und anschliessendem Trocknen.

Gemäss einer bevorzugten Ausführungsform wird erfindungsgemäss cholesterisches Schichtmaterial bereitgestellt, dessen Reflexionsmaximum, z.B. nach 15-minütiger Xylolbehandlung bei 80°C, um nicht mehr als etwa 10 nm, wie z.B. 0 bis 8 nm, 0 bis 5 nm oder 0 bis 2 nm, in den höheren oder niedrigeren Wellenlängenbereich verschiebbar ist. Bei einer Veränderung des Reflexionsmaximums im oben angegebenen Bereich liegt kein "visuell erkennbarer Farbshift" im Sinne der Erfindung vor.

In den erfindungsgemässen cholesterischen Schichtmaterialien weist jede cholesterische Schicht eine mittlere Trockenschichtdicke (Schichtdicke der getrockneten und gegebenenfalls vernetzten Schicht) von mindestens einer Pitch-Höhe und von weniger als etwa 5 µm, wie z.B. 0,5 bis 3 µm, insbesondere kleiner oder gleich etwa 2 µm, wie z.B. 0,5 bis 2 µm, vorzugsweise kleiner oder gleich etwa 1 µm, wie z.B. 0,5 bis 1 µm, auf.

Sind mehrere Schichten gleichzeitig vorhanden, so sind die Einzelschichtdicken gleich oder verschieden. Damit betrifft ein weiterer Gegenstand cholesterisches Schichtmaterial mit mehreren farbshiftbeständigen cholesterischen Schichten gleicher oder verschiedener Dicke und gleicher oder verschiedener chemischer Zusammensetzung.

Gegenstand der Erfindung sind insbesondere auch cholesterische Schichtmaterialien welche dreilagig aufgebaut sind und zwischen zwei erfindungsgemässen Farbshift-beständigen cholesterischen Schichten eine transmittiertes Licht teilweise oder vollständig absorbierende Zwischenschicht aufweisen. Die absorbierende Zwischenschicht kann dabei Eigenschaften besitzen, wie sie z.B. in der PCT/EP 98/05544, PCT/EP 98/05545 oder der DE-A-197 57 699 beschrieben sind. Auf die Offenbarung dieser Schutzrechte wird hiermit ausdrücklich Bezug genommen.

Ein weiterer Gegenstand der Erfindung sind cholesterische Pigmente, umfassend wenigstens eine vernetzte orientierte cholesterische Schicht, die erhältlich sind durch Zerkleinern eines oben beschriebenen ein- oder mehrschichtigen cholesterischen Schichtmaterials. Gegenstand der Erfindung sind insbesondere solche Pigmente mit einer mittleren Teilchengrösse im Bereich von 5 bis 50 µm und eine Dicke von bis zu 5 µm, die ausserdem dadurch gekennzeichnet sind, dass die vernetzte(n) cholesterische(n) Schicht(en) hohe Temperaturstabilität zeigt (zeigen).

Bevorzugt weisen die Pigmente über einen grossen Temperaturbereich, wie z.B. von 20 bis 250°C keinen Farbshift auf. Insbesondere bevorzugt zeigen sie keinen Farbshift bei Temperaturerhöhung auf etwa 80 bis 160°C oder 80 bis 130°C mit oder ohne Einwirkung von organischen Verdünnungsmitteln, wie Toluol und Xylol und anderen Verdünnungsmitteln, wie sie üblicherweise in der Lacktechnologie verwendet werden.

Gegenstand der Erfindung ist auch ein Verfahren zur Herstellung oben beschriebener cholesterischer Schichtmaterialien durch:
a) Aufbringen, insbesondere Aufgiessen, und dabei Orientieren einer cholesterischen Beschichtungsmasse, die wenigstens eine vernetzbare Substanz umfasst, auf einen Träger unter Ausbildung einer ersten cholesterischen Schicht, wobei der Träger im Wesentlichen chemisch inert gegenüber der aufzutragenden cholesterischen Schicht ist;
b) Trocknen und Vernetzung der aufgetragenen Schicht, wobei die Bedingungen so gewählt sind, dass man keinen visuell erkennbaren Farbshift unter den oben genannten Bedingungen beobachtet; und
c) Entfernen des Schichtmaterials vom Träger, nachdem gegebenenfalls eine oder mehrere weitere cholesterische Schichten auf die gemäss Schritt a) erhaltenen Schicht aufgetragen wurden. Die Auftragung, Trocknung und Härtung der weiteren Schichten erfolgt dabei in gleicher Weise wie in den Schritten a) und b).

Erfindungsgemäss wurde insbesondere festgestellt, dass die Lösungsmittelbeständigkeit des cholesterischen Schichtmaterials wesentlich von den Härtungsbedingungen beeinflusst wird, wohingegen andere Parameter, wie Schichtdicke, Scherkraft und Trocknungsbedingungen stärker variierbar sind.

Die Härtungsbedingungen können erfindungsgemäss über verschiedene Stellgrössen, insbesondere Leistung der Strahlungsquelle, Dauer der Härtung (d.h. Verweilzeit im Strahlungsbereich der Strahlungsquelle) und Schichttemperatur während der Härtung optimal eingestellt werden.

Erfindungsgemäss wurde auch festgestellt, dass durch Variation der Schichttemperatur während der Härtung (z.B. über eine beheizbare Walze) die Haftkraft zwischen einer neu aufgetragenen und der darunterliegenden Cholesterschicht gezielt und damit bedarfsgerecht einstellbar ist. So sind beispielsweise Mehrschichtverbunde mit stabiler Zwischenlagenhaftung und geringer Haftung zum Träger herstellbar, die auf diese Weise gut im Verbund vom Träger abnehmbar sind.

Vorzugsweise setzt man erfindungsgemäss einen Träger ein, der die Orientierung der darauf aufgegossenen cholesterischen Schicht während der Trocknung und Härtung nicht stört. Weiterhin ist bevorzugt, dass der Träger gegenüber der auf ihn aufgegossenen, getrockneten und vernetzten ersten cholesterischen Schicht eine Haftkraft von weniger als etwa 1 cN besitzt. Geeignete Träger sind dabei ausgewählt unter Kunststoff-, Metall-, Glas- oder Keramikträgern.

Gemäss einer bevorzugten Verfahrensvariante setzt man einen Kunststoffträger ein, der eine Releaseschicht, wie z.B aus vernetztem, vorzugsweise orientiertem, cholesterischem Material umfasst, auf welche die erste cholesterische Schicht aufgegossen wird. Andere geeignete Releaseschichtmaterialien sind z.B. Polyamide, Polyacrylate und Teflon. Dies ist besonders dann zweckmässig, wenn eine cholesterische Schicht oder ein Schichtverbund vom Träger entfernt werden muss, z.B. wenn aus dem Schichtmaterial Pigmente hergestellt werden sollen oder ein Polarisatorschichtverbund auf einen anderen Träger übertragen werden soll. Dabei ist die Haftkraft zwischen Kunststoffträger und Releaseschicht vorzugsweise mindestens etwa zwei- bis zehnfach, wie z.B. fünffach, grösser ist als die Haftkraft zwischen Releaseschicht und erster cholesterischer Schicht. Dies begünstigt ein einfaches Ablösen der cholesterischen Schicht oder des Schichtverbundes vom Träger bei gleichzeitigem Verbleib der Releaseschicht auf dem Träger, der dann gegebenenfalls erneut beschichtbar ist.

Bevorzugt setzt man erfindungsgemässe Beschichtungsmassen für die cholesterische(n) Schicht(en) und die Releaseschicht ein, die unabhängig voneinander eine Viskosität im Bereich von etwa 1 bis 50 mPas besitzen. Ausserdem liegt die Beschichtungsgeschwindigkeit im Bereich von etwa 1 bis 800 m/min liegt. Der Feststoffgehalt der Beschichtungsmasse liegt gewöhnlich bei etwa 30 bis 70 Gew.-%.

Gemäss einer bevorzugten Verfahrensvariante erfolgt die Vernetzung der cholesterischen Schicht(en) und der gegebenfalls vorliegenden cholesterischen Releaseschicht durch Strahlungshärtung, insbesondere durch Elektronenstrahlen oder UV-Strahlung, bei gleichzeitigem Erwärmen der zu härtenden Schicht. Dabei liegt die Strahlerleistung im Bereich von etwa 50 bis 200 Watt/cm. Die Härtung erfolgt bevorzugt in einer Inertgasatmosphäre, wie z.B. unter Stickstoff.

Die Schichttemperatur wird während der Strahlungshärtung auf mehr als etwa 60°C, bevorzugt auf mindestens 80°C, vorzugsweise mindestens 90°C, wie z.B. 90 bis 120°C eingestellt.

Die jeweils optimale Parameterkombination ist vom Fachmann ausgehend von der erfindungsgemässen Lehre im Rahmen weniger Vorversuche ermittelbar.

Wie in den beiliegenden Ausführungsbeispielen gezeigt wird, erhält man z.B. bei einer Strahlerleistung von 120 W/cm einer Härtungsdauer von 180 msec und einer Schichttemperatur im Bereich von 60 bis 100°C Schichtmaterial hoher Lösungsmittelbeständigkeit.

Gemäss einer weiteren Variante des erfindungsgemässen Verfahrens bringt man auf die zuletzt aufgetragene cholesterische Schicht eine Folie auf und entfernt die eine oder mehreren cholesterischen Schichten im Verbund mit dieser Folie vom Träger.

Gemäss einer anderen Variante entfernt man die eine oder mehreren cholesterischen Schichten vom Träger durch Abblasen mit Druckluft, Wasserstrahl oder Wasserdampf und vermahlt zu Pigmenten.

Gegenstand der Erfindung sind auch Zusammensetzungen, enthaltend wenigstens ein cholesterisches ein- oder mehrschichtiges Pigment mit verbesserter Farbshift-Stabilität.

Ein weiterer Gegenstand der Erfindung betrifft die Verwendung erfindungsgemässer Schichtmaterialien oder Pigmente im Fahrzeugoder Fahrzeugzubehörsektor, im EDV-, Freizeit-, Sport- und Spielsektor, in optischen Elementen, im Kosmetikbereich, im Textil-, Leder- oder Schmuckbereich, bei Geschenkartikeln, bei Schreibutensilien, oder auf Brillengestellen, im Bausektor, im Haushaltssektor, bei Druckerzeugnissen aller Art, bei der Herstellung von Lacken oder Farben.

Die durch die erfindungsgemässen cholesterischen Folien bzw. cholesterischen Pigmente erzielbaren Farbeffekte umfassen bedingt durch die Vielfalt der erzielbaren Reflektionswellenlängen auch den UV- und den IR-Bereich sowie selbstverständlich den Bereich des sichtbaren Lichtes. Werden die erfindungsgemässen Pigmente auf Banknoten, Scheckkarten, anderen bargeldlosen Zahlungsmitteln oder Ausweisen aufgebracht (beispielsweise durch bekannte Druckverfahren) oder in sie eingearbeitet, so erschwert dies das identische Kopieren dieser Gegenstände erheblich. Ein weiterer Gegenstand der vorliegenden Erfindung ist somit die Verwendung der erfindungsgemässen Pigmente zur fälschungserschwerenden Bearbeitung von Gegenständen insbesondere von Banknoten, Scheckkarten oder anderen bargeldlosen Zahlungsmitteln oder Ausweisen.

Als optische Elemente im Sinne der Erfindung sind alle Gegenstände gemeint, welche die optischen Eigenschaften nematischer und/oder cholesterischer Flüssigkristalle ausnutzen. Im Einzelnen können dies auswahlsweise Verzögerungsfolien, Notch-Filter, Farbfilter für Displays, Polarisatoren, aber auch einfach Spiegel für dekorative Zwecke sein. Die dreidimensionale Gestalt der optischen Elemente kann planar, aber auch konkav oder konvex gekrümmt sein.

Insbesondere ist Gegenstand der Erfindung auch die Verwendung obiger Zusammensetzungen zur Beschichtung von Gebrauchsgegenständen oder zur Lackierung von Fahrzeugen.

Ein bevorzugtes Einsatzgebiet sind auch Polarisatoren, umfassend ein erfindungsgemässes Schichtmaterial, gegebenenfalls aufgetragen auf eine Trägerfolie. So können z.B. Breitbandpolarisatoren hergestellt werden, umfassend ein Schichtmaterial mit einer Anzahl von z.B. 3 bis 20 cholesterischen Schichten mit aufeinander abgestimmten Reflexionsmaxima, wobei der Polarisator eine Gesamtdicke (ohne Trägerfolie) im Bereich von etwa 2 bis 50 µm besitzt.

Je nach Anwendungszweck kann das erfindungsgemässe Schichtmaterial auf dem Träger verbleiben, davon abgelöst werden, oder auf einen neuen Träger transferiert werden. So können beispielsweise IR-reflektierende Schichtverbunde (mit transparenter Klebeschicht) auf Glas- oder Plexiglasscheiben transferiert werden.

Geeignete Zusammensetzungen der cholesterischen Schicht sind in DE-A-197 38 368.8 sowie 197 38 369.6 der gleichen Anmelderin beschrieben. Auf die Offenbarung bei der Anmeldung wird in vollem Umfang Bezug genommen. Insbesondere geht aus der DE-A-197 38 369.6 hervor, dass es zweckmässig ist, zur Herstellung cholesterischer Schichten ein durch Verdünnen giessfähig gemachtes cholesterisches Gemisch zu verwenden. Zur Herstellung der Schichten brauchbare cholesterische und nematische Moleküle sind beispielsweise beschrieben in DE-A-43 42 280, 196 02 848, 197 136 38, 195 32 408, 197 04 506, 196 31 658, 197 17 371, 195 41 820, 196 19 460, 197 35 829, 197 44 321 und 197 49 123, EP-A-0 358 208, WO 97/00600, 97/49694, 98/03610, 98/04544, 98/14442, 98/23580 und 98/47979, worauf hiermit ausdrücklich Bezug genommen wird.

Vorzugsweise enthalten die cholesterischen Schichten cholesterische Gemische, die ausgewählt sind unter
a) mindestens einem cholesterischen, polymerisierbaren Monomer;
b) mindestens einem achiralen, nematischen, polymerisierbaren Monomer und einer chiralen Verbindung;
c) mindestens einem cholesterischen, vernetzbaren Polymer;
d) einem cholesterischen Polymer in einem polymerisierbaren Verdünnungsmittel; oder
e) mindestens einem cholesterischen Polymer, dessen cholesterische Phase durch schnelles Abkühlen unter die Glasübergangstemperatur eingefroren werden kann,
im gehärtetem Zustand.

Durch Härtung wird die Orientierung der cholesterischen Moleküle in der Cholesterschicht fixiert. Bei der Verwendung mehrerer cholesterischer Schichten besitzen diese gleiche oder verschiedene optische Eigenschaften. Sie können insbesondere Licht gleicher oder unterschiedlicher Wellenlänge reflektieren, d.h. von gleicher oder von unterschiedlicher Farbe sein. Im letztgenannten Fall lassen sich besonders interessante Farbeffekte erzielen. Beispielsweise sind die Schichten von unterschiedlicher Händigkeit, so dass beispielsweise eine Schicht Licht einer bestimmten Wellenlänge linkszirkular-polarisiert reflektiert, wogegen eine andere Schicht Licht derselben Wellenlänge rechtszirkular-polarisiert reflektiert. Vorteilhafterweise erscheint deshalb beispielsweise ein Lack, der erfindungsgemässe Pigmente in dieser bevorzugten Ausführungsform enthält, besonders brillant, da die Pigmente in der Lackschicht in statistischer Verteilung dem einfallenden Licht zugewandt sind, so dass der Lack sowohl rechtsals auch linkszirkular-polarisiertes Licht einer bestimmten Wellenlänge reflektiert, wogegen ein Lack, der nur Pigmente mit nur einer cholesterischen Schicht oder mit mehreren cholesterischen Schichten gleicher Händigkeit enthält, entweder das links- oder das rechtszirkular-polarisierte Licht durchlässt. Durch Ausbildung mehrerer Cholesterschichten unterschiedlicher Reflektionswellenlänge sind Breitbandpolarisatoren herstellbar.

Die mehreren Schichten können auch hinsichtlich ihrer mechanischen Eigenschaften gleich oder verschieden sein. Sie können beispielsweise unterschiedliche Dicke oder Sprödigkeit aufweisen.

Eine bevorzugte Gruppe erfindungsgemäss brauchbarer Beschichtungsmassen (obige Gruppe b)) umfasst als nematische Komponente wenigstens eine flüssigkristalline Verbindung der allgemeinen Formel I

Z¹-Y¹-A¹-Y³-M-Y⁴-A²-Y²-Z² (I),

worin
- Z¹, Z²: unabhängig voneinander für einen Rest mit reaktiven, polymerisierbaren Gruppen, stehen;
- Y¹ - Y⁴: unabhängig voneinander für eine chemische Einfachbindung, - O-, -S-, -O-CO-, -CO-O-, -O-CO-O-, -CO-NR-, -NR-CO-, - O-CO-NR-, -NR-CO-O- oder -NR-CO-NR stehen, und R für C₁-C₄-Alkyl steht;
- A¹, A²: unabhängig voneinander für einen Spacer mit 1 bis 30 C-Atomen stehen, in welchem die Kohlenstoffkette gegebenenfalls durch Sauerstoff in Etherfunktion, Schwefel in Thioetherfunktion oder durch nichtbenachbarte Iminooder C₁-C₄-Alkyliminogruppen unterbrochen ist; und,
- M: für eine mesogene Gruppe steht.

Bevorzugte Reste Z¹ und Z² sind

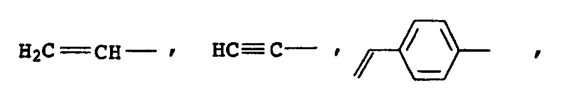

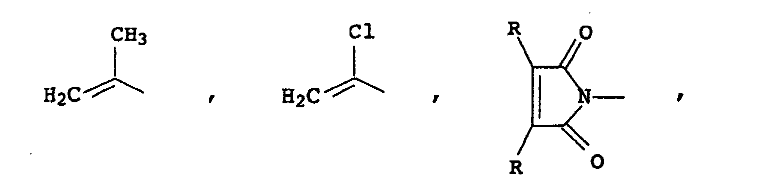

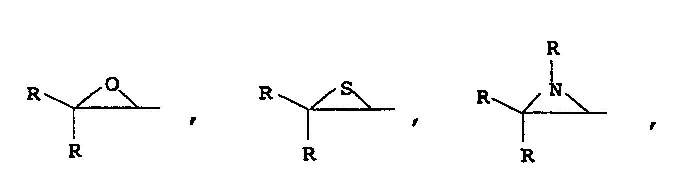

― N=C=O, ―N=C=S und ―O―C≡N,

wobei die Reste R für C₁-C₄-Alkyl stehen und gleich oder verschieden sein können.

Von den reaktiven polymerisierbaren Gruppen können die Cyanate spontan zu Cyanuraten trimerisieren und sind daher bevorzugt zu nennen. Verbindungen mit Epoxid-, Thiiran-, Aziridin-, Isocyanatund Isothiocyanatgruppen benötigen zur Polymerisation weitere Verbindungen mit komplementären reaktiven Gruppen. So können beispielsweise Isocyanate mit Alkoholen zu Urethanen und mit Aminen zu Harnstoffderivaten polymerisieren. Analoges gilt für Thiirane und Aziridine. Die komplementären reaktiven Gruppen können dabei entweder in einer zweiten erfindungsgemässen Verbindung vorhanden sein, die mit der ersteren gemischt wird, oder sie können durch Hilfsverbindungen, die zwei oder mehr dieser komplementären Gruppen enthalten, in das Polymerisationsgemisch eingebracht werden. Enthalten diese Verbindungen jeweils zwei dieser reaktiven Gruppen, so entstehen lineare Polymere mit überwiegend thermoplastischem Charakter. Enthalten die Verbindungen mehr als zwei reaktive Gruppen, so entstehen vernetzte Polymere, die mechanisch besonders stabil sind. Die Maleinimidogruppe eignet sich besonders zur radikalischen Copolymerisation mit olefinischen Verbindungen wie Styrol.

Bevorzugte polymerisierbare Gruppen Z¹ und Z² sind diejenigen, die der radikalischen Polymerisation zugänglich sind, also besonders die olefinisch ungesättigten Gruppen, und unter diesen haben in Kombination mit Y¹ bzw. Y² die Gruppen 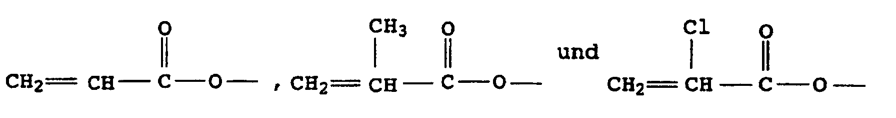 besondere Bedeutung.

Die in den erfindungsgemässen Verbindungen enthaltenen Molekülteile Z¹, Z², A¹, A², M und X sind über Brückenglieder Y¹ - Y⁴ wie -O-, -S-, -CO-O-, -O-CO-, -O-CO-O-, -CO-NR-, -NR-CO-, -O-CO-NR-, -NR-CO-O-, -NR-CO-NR- oder auch über eine direkte Bindung miteinander verknüpft. Chirale polymerisierbare Verbindungen mit einer dieser Gruppen haben die vorteilhafte Eigenschaft besonders niedriger Phasenumwandlungstemperaturen und breiter Phasenbereiche und sind somit für Anwendungen bei Raumtemperatur besonders geeignet. Dies trifft besonders für die Carbonatgruppe zu.

Als Spacer A¹ und A² kommen alle für diesen Zweck bekannten Gruppen in Betracht. Die Spacer enthalten in der Regel 1 bis 30, vorzugsweise 3 bis 12 C-Atome und bestehen aus vorwiegend linearen aliphatischen Gruppen. Sie können in der Kette z.B. durch nicht benachbarte Sauerstoff- oder Schwefelatome oder Imino- oder Alkyliminogruppen wie Methyliminogruppen unterbrochen sein. Als Substituenten für die Spacerkette kommen dabei noch Fluor, Chlor, Brom, Cyan, Methyl und Ethyl in Betracht.

Repräsentative Spacer sind beispielsweise:

-(CH₂)ₚ-, -(CH₂CH₂O)ₘCH₂CH₂-, -CH₂CH₂SCH₂CH₂-, -CH₂CH₂NHCH₂CH₂-,

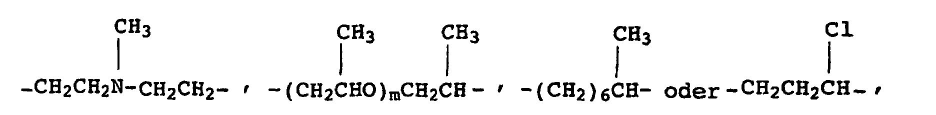

wobei
m für 1 bis 3 und p für 1 bis 12 steht.

Als Reste M können alle bekannten mesogenen Gruppen dienen. Insbesondere kommen Gruppen der Formel Ia

- (-T-Y⁵-)ᵣ-T- (Ia)

in Betracht, in der die Variablen folgende Bedeutung haben:
- T: zweiwertige gesättigte oder ungesättigte iso- oder heterocyclische Reste,
- Y⁵: Brückenglieder gemäss der Definition für Y¹ - Y⁴; -CH₂-O-; -O-CH₂-; -CH=N-, -N=CH- oder -N=N-,
- r: 0, 1, 2 oder 3,
wobei die Reste T und Y⁵ im Falle r > O gleich oder verschieden sein können.

Vorzugsweise ist r gleich 1 oder 2.

Die Reste T können auch durch Fluor, Chlor, Brom, Cyan, Hydroxy oder Nitro substituierte Ringsysteme sein. Bevorzugte Reste T sind:

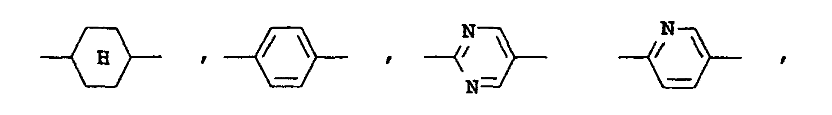

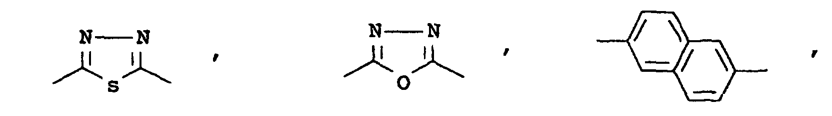

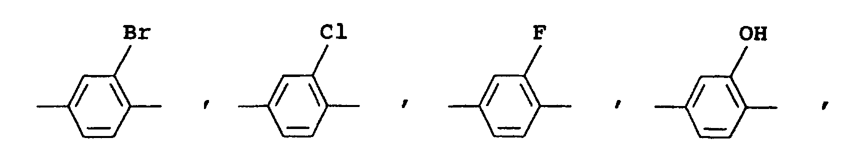

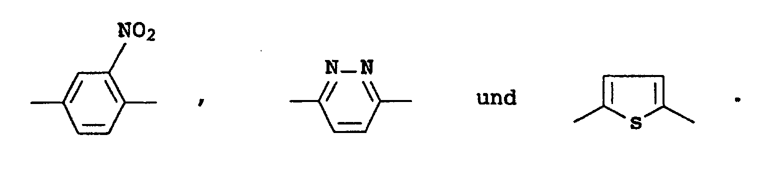

Bevorzugt als mesogene Gruppen M sind z.B.: 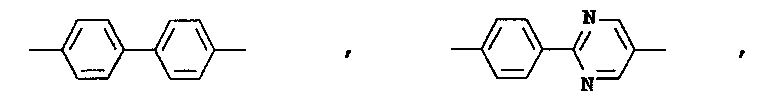 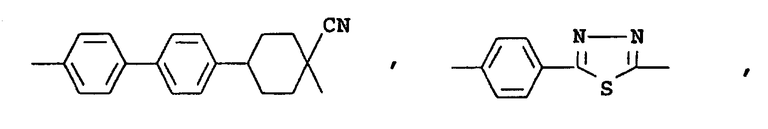 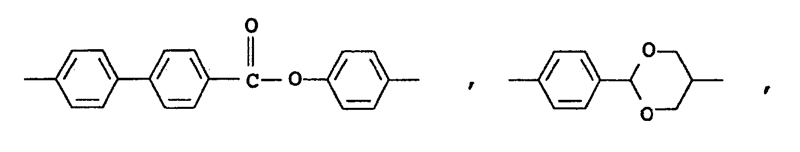 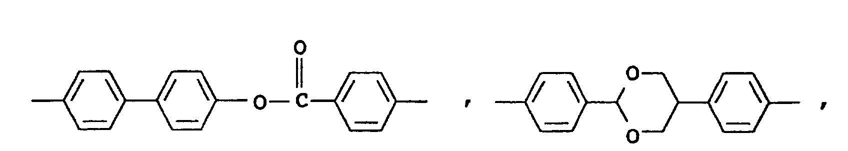 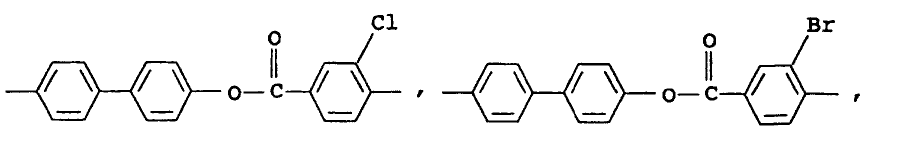 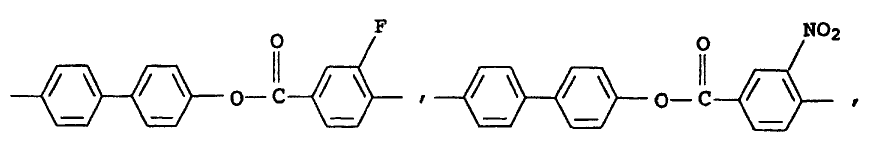 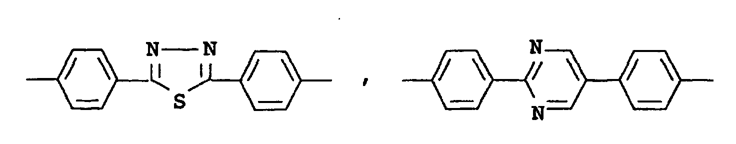 oder

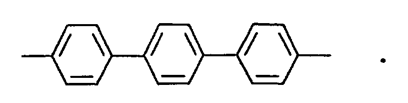

Besonders bevorzugt sind mesogene Gruppen M der folgenden Formeln 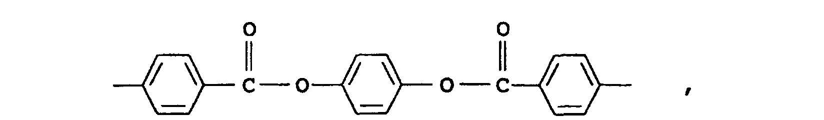 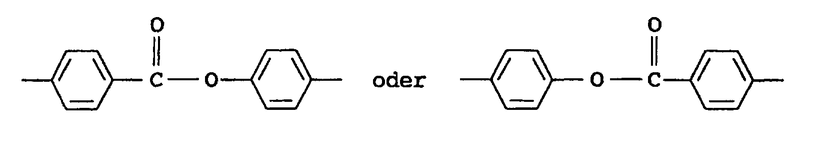 wobei jeder Ring bis zu drei gleiche oder verschiedene Substituenten aus der folgenden Gruppe tragen kann:
C₁-C₂₀-Alkyl, C₁-C₂₀-Alkoxy, C₁-C₂₀-Alkoxycarbonyl, C₁-C₂₀-Monoalkylaminocarbonyl, C₁-C₂₀-Alkylcarbonyl, C₁-C₂₀-Alkylcarbonyloxy, C₁-C₂₀-Alkylcarbonylamino, Formyl, Halogen, Cyan, Hydroxy oder Nitro.

Bevorzugte Substituenten für die aromatischen Ringe sind neben Fluor, Chlor, Brom, Cyan, Formyl und Hydroxy vor allem kurzkettige aliphatische Reste wie Methyl, Ethyl, n-Propyl, Isopropyl, n-Butyl, Isobutyl, tert.-Butyl sowie Alkoxy-, Alkoxycarbonyl-, Alkylcarbonyl-, Alkylcarbonyloxy-, Alkylcarbonylamino- und Monoalkylaminocarbonylreste, die diese Alkylgruppen enthalten.

Die äusseren Benzolringe der besonders bevorzugten Gruppen M haben vorzugsweise folgende Substitutionsmuster: 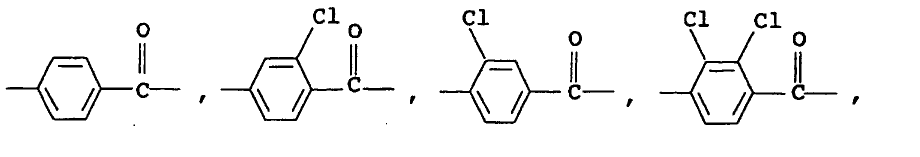 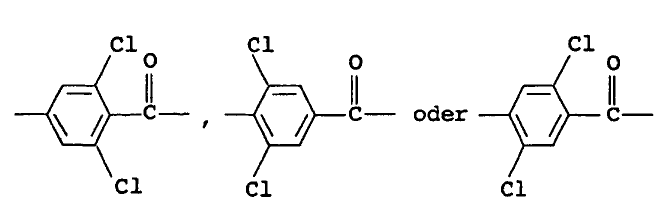 oder sie sind analog mit F, Br, CH₃, OCH₃, CHO, COCH₃, OCOCH₃ oder CN anstelle von Cl substituiert, wobei die Substituenten auch gemischt vorliegen können. Ferner sind die Strukturen 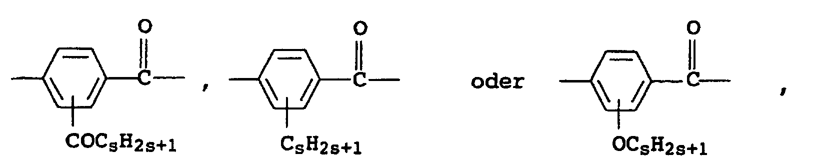 zu nennen, bei denen s 2 bis 20, vorzugsweise 8 bis 15, bedeutet.

Die bevorzugten Substitutionsmuster des mittleren Benzolrings der besonders bevorzugten Gruppen M sind: 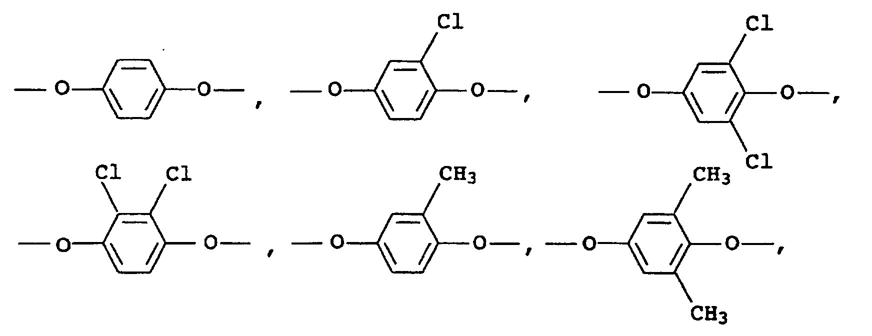 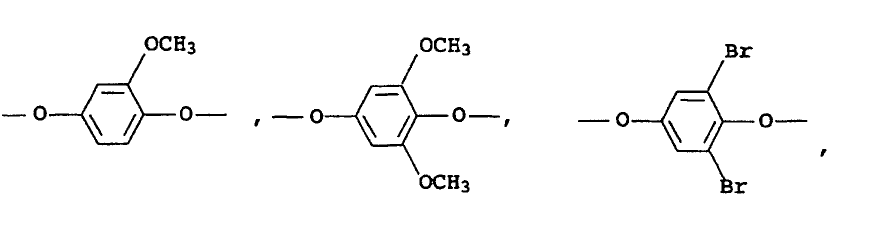 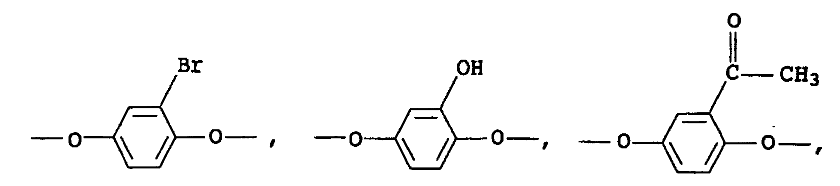 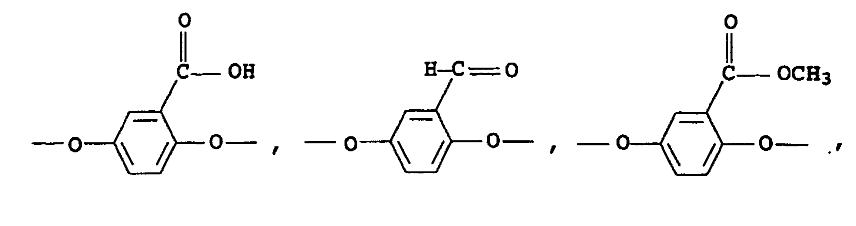 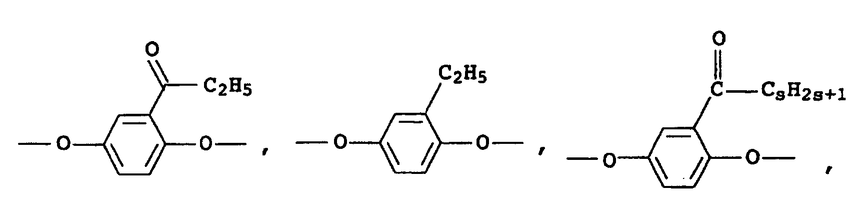 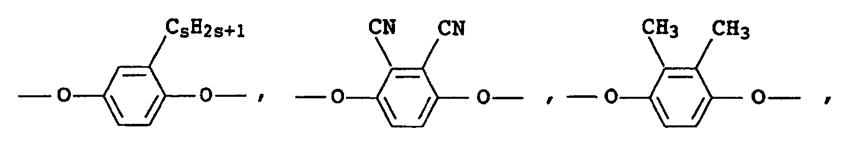 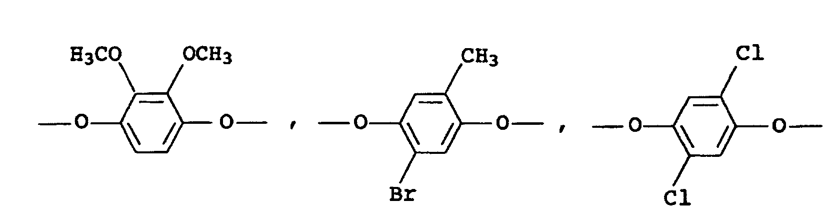 oder

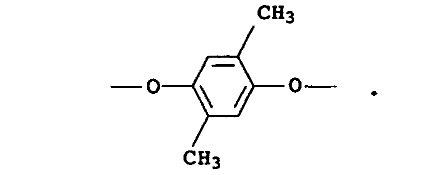

Bevorzugte erfindungsgemässe Verbindungen I sind auch solche, in denen die Restepaare Z¹ und Z², Y¹ und Y², Y³ und Y⁴ sowie A¹ und A² jeweils gleich sind.

Ganz besonders bevorzugt ist die mesogene Gruppe M der folgenden Formel

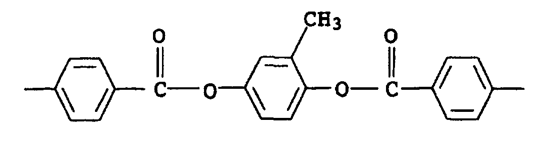

Von den erfindungsgemässen Verbindungen I können auch Mischungen hergestellt werden. Solche Mischungen besitzen meist eine gegenüber den reinen Mischungskomponenten reduzierte Viskosität und haben in der Regel niedrigere flüssigkristalline Phasentemperaturen, so dass sie teilweise für Anwendungen bei Raumtemperatur geeignet sind.

In den Mischungen der erfindungsgemässen Verbindungen können nicht nur z.B. "dreikernige", gegebenenfalls an den Ringen substituierte, mesogene Gruppen M der Formel 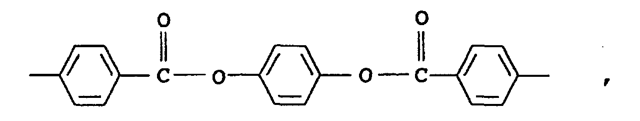 hierbei steht in Formel Ia
- Y⁵: für 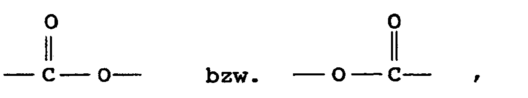
- T: für drei gleiche gegebenenfalls substituierte Reste 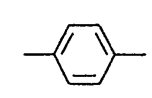 und
- r: für 2,
als Molekülfragmente auftreten, sondern z.B. auch "Zweikernringe" Gruppen M der Formeln 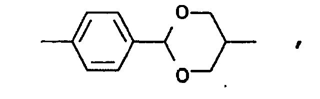 (hierbei steht in Formel Ia
- Y⁵: für eine chemische Einfachbindung,
- T: für unterschiedliche 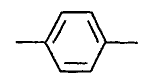 (ungesättigt isocyclisch) Reste und 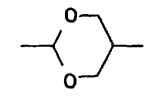 (gesättigt heterocyclisch), und
- r: für 1,)
oder 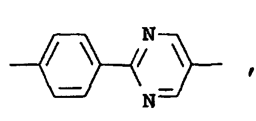 hierbei steht in Formel Ia
- Y⁵: für eine chemische Einfachbindung,
- T: für unterschiedliche 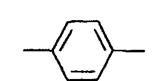 (ungesättigt isocyclisch) Reste und 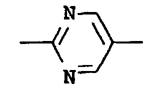 (ungesättigt heterocyclisch), und
- r: für 1.

Besonders bevorzugte "zweikernige" mesogene Gruppen M sind dabei die Fragmente 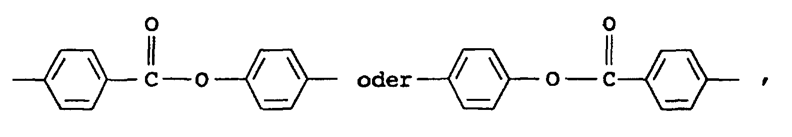 welche zusätzlich noch an den aromatischen Ringen, wie vorstehend beschrieben, substituiert sein können.

Flüssigkristallzusammensetzungen, welche eine oder mehrere der Verbindungen der Formel I enthalten, können zusätzlich auch eine oder mehrere chirale Verbindungen enthalten. Auf diese Weise entstehen cholesterische flüssigkristalline Phasen, die vor allem interessante optische Eigenschaften haben und beispielsweise in Abhängigkeit vom Betrachtungswinkel Licht von unterschiedlicher Wellenlänge reflektieren. Solche Flüssigkristallzusammensetzungen sind insbesondere für den Einsatz in optischen Elementen geeignet.

Als chirale Komponenten sind besonders solche geeignet, die einerseits eine grosse Verdrillungsfähigkeit aufweisen und andererseits gut mischbar mit den flüssigkristallinen Verbindungen sind, ohne die flüssigkristalline Phasenstruktur zu stören.

Bevorzugte chirale Verbindungen, die z.B. in Gemischen gemäss obiger Gruppe b) verwendet werden, sind z.B. solche der allgemeinen Formeln Ib, Ic, Id, Ie

(Z¹-Y⁵)ₙX (Ib),

(Z¹-Y¹-A¹-Y⁵)ₙX (Ic),

(P¹-Y⁵)ₙX (Id),

(Z¹-Y¹-A¹-Y³-M-Y⁴)ₙX (Ie),

in der die variablen A¹, Z¹, Y¹, Y³, Y⁴, Y⁵ und n die oben angegebene Bedeutung für die Formel I besitzen, P¹ für einen Rest, ausgewählt unter Wasserstoff, C₁-C₃₀-Alkyl, C₁-C₃₀-Acyl, C₃-C₈-Cycloalkyl, gegebenenfalls substituiert durch ein bis drei C₁-C₆-Alkyl und wobei die Kohlenstoffkette der Alkyl-, Acyl- und Cycloalkylreste durch Sauerstoff in Etherfunktion, Schwefel in Thioetherfunktion oder durch nichtbenachbarte Imino- oder C₁-C₄-Alkyliminogruppen unterbrochen sein kann, steht, n für eine Zahl von 1 bis 6 steht und X ein n-wertiger chiraler Rest ist.

Reste X sind beispielsweise 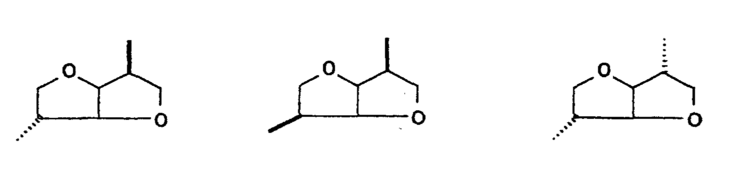 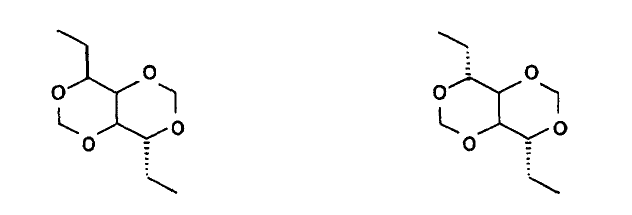 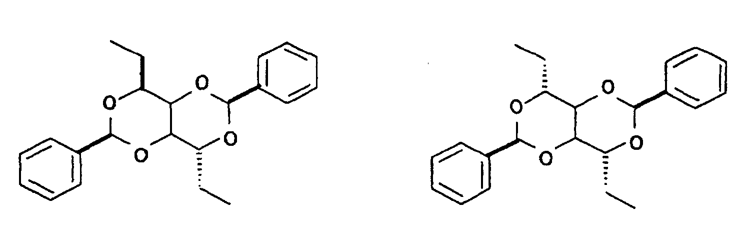 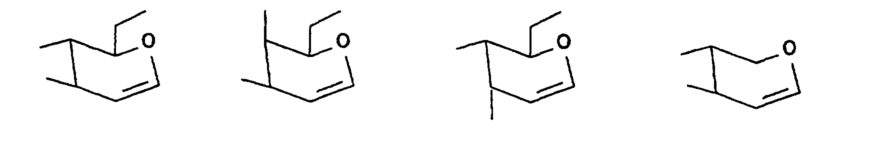 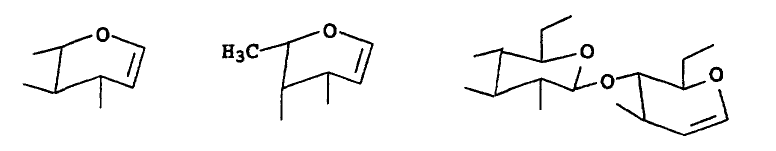 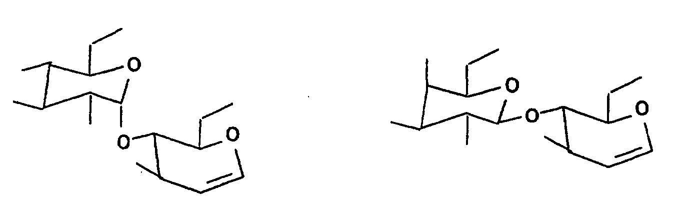 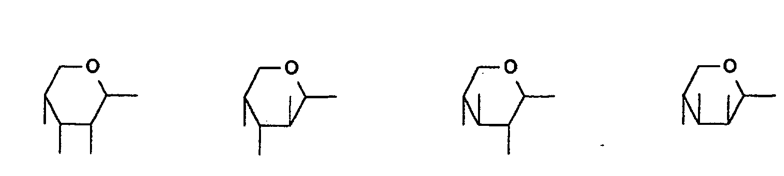 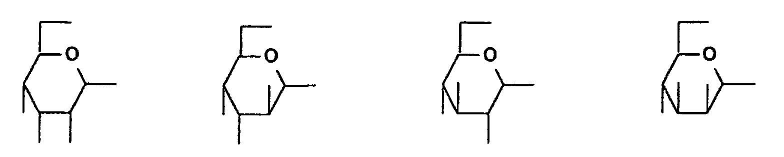 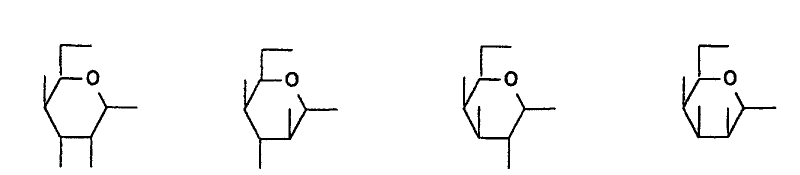 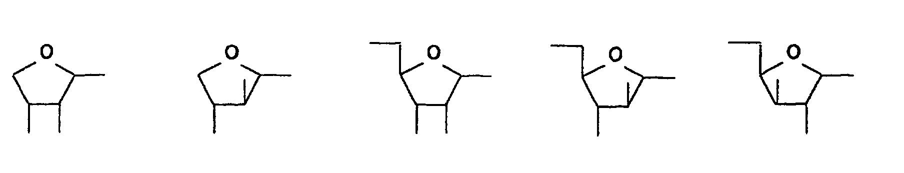 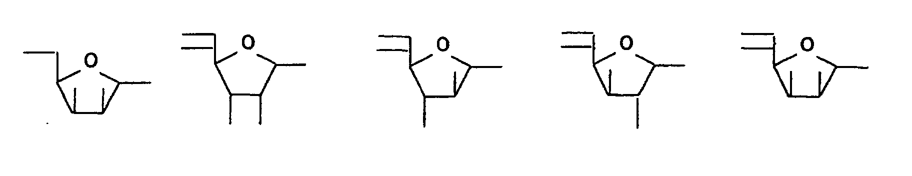 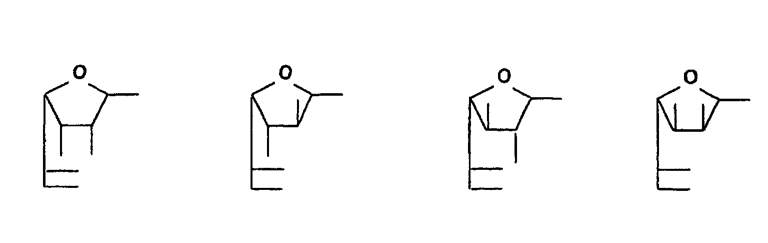 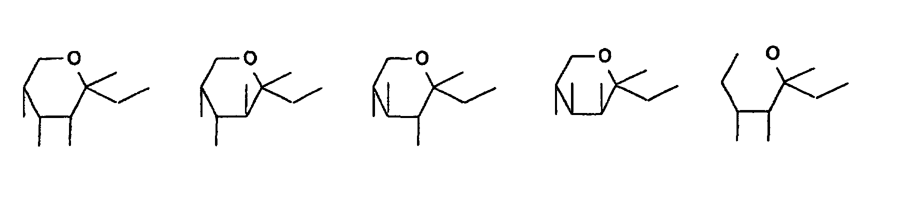 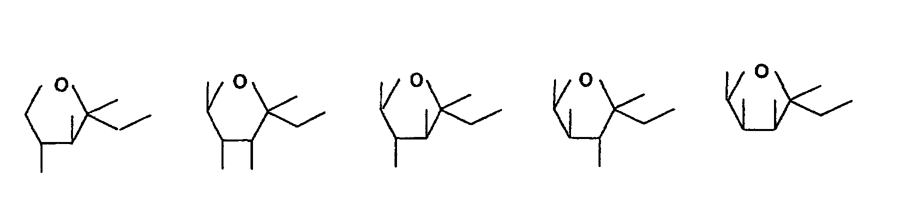 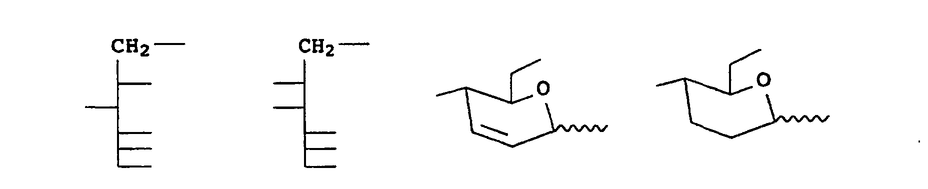 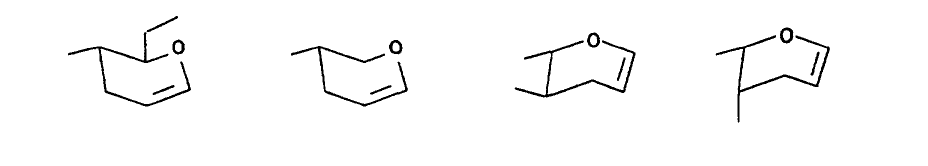 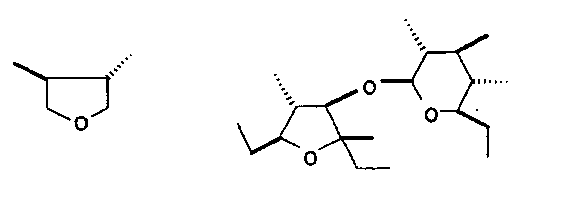 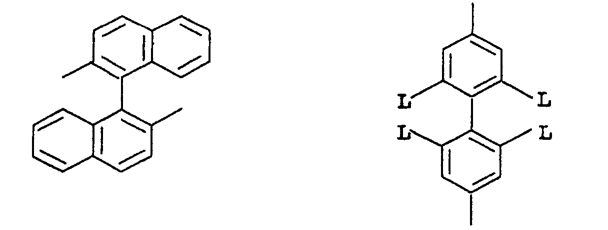 wobei
- L: C₁- bis C₄-Alkyl, C₁-C₄-Alkoxy, Halogen, COOR, OCOR, CONHR oder NHCOR ist und R C₁-C₄-Alkyl bedeutet.
(Die endständigen Striche in den aufgeführten Formeln geben die freien Valenzen an).

Besonders bevorzugt sind z.B.

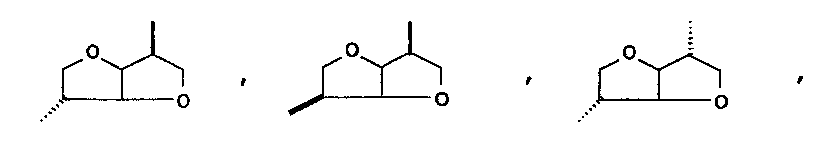

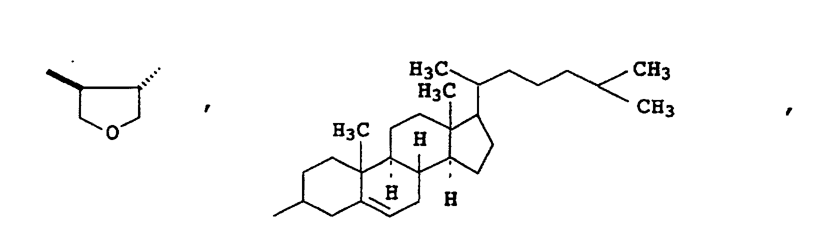

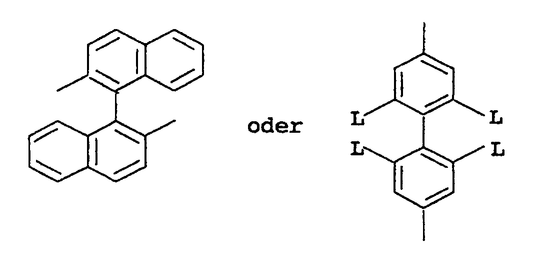

Diese und weitere bevorzugte chirale Komponenten sind beispielsweise in der DE-A 43 42 280 und in den deutschen Patentanmeldungen 19520660.6 und 19520704.1 genannt.

Weitere geeignete Reste X sind: 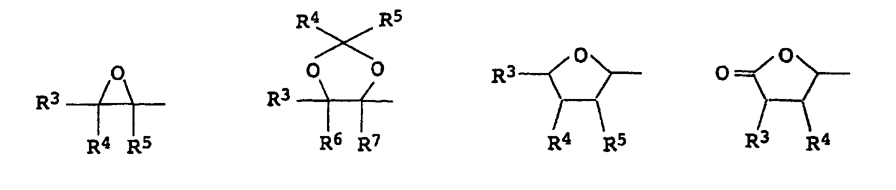 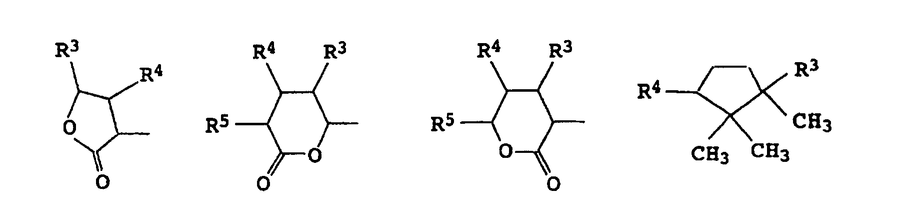 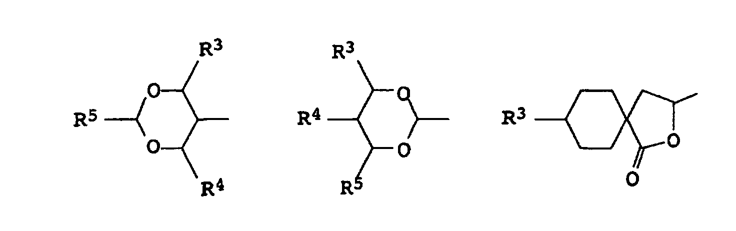 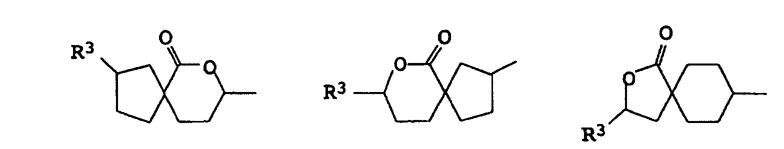 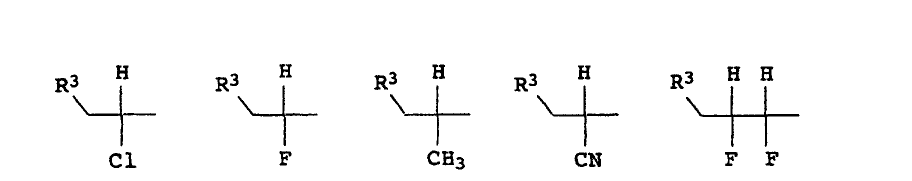 worin R³, R⁴, R⁵, R⁶ und R⁷ gleich oder verschieden sind und für
- Wasserstoff, oder
- einen geradkettigen oder verzweigten Alkylrest mit oder ohne asymmetrischem Kohlenstoffatom mit 1 bis 16 C-Atomen, wobei
   eine oder mehrere nicht benachbarte und nicht terminale CH₂-Gruppen durch O ersetzt sein können und/oder
   eine oder zwei CH₂-Gruppen durch CH=CH- ersetzt sein können, stehen, oder
- R⁴ und R⁵ zusammen auch -(CH₂)₄- oder -(CH₂)₅- bedeuten können, wenn sie an ein Oxiran-, Dioxolan-, Tetrahydrofuran-, Tetrahydropyran-, Butyrolacton- oder Valerolacton-System gebunden sind.

Besonders bevorzugte chirale Komponenten sind folgende Verbindungen (A) bis (G):

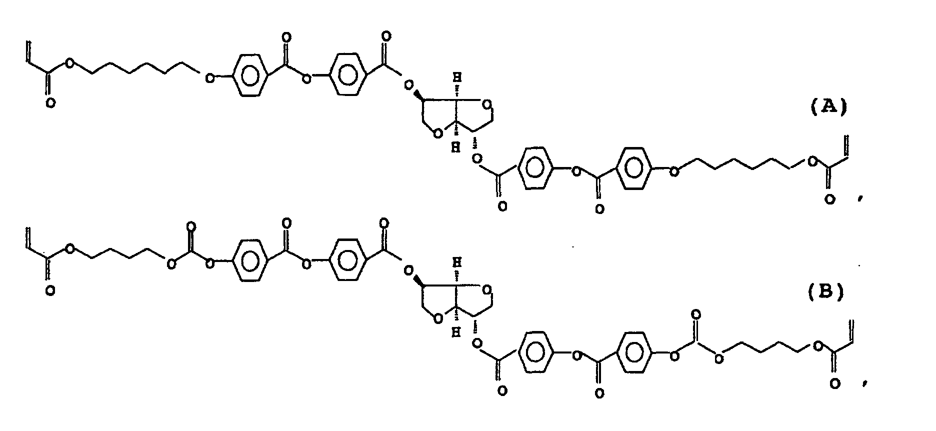

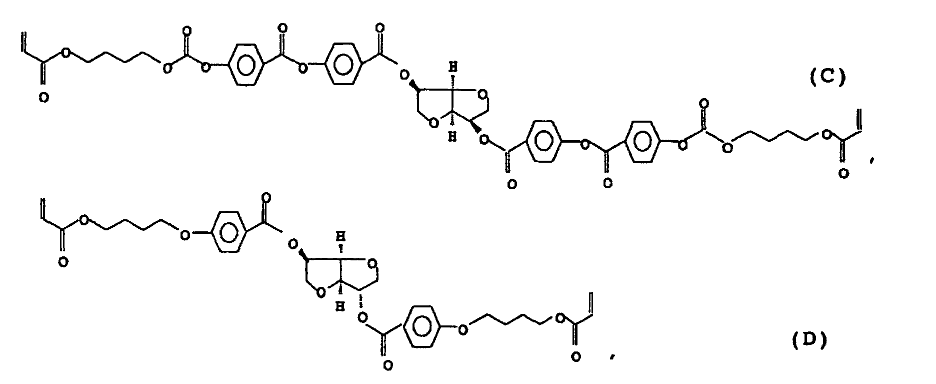

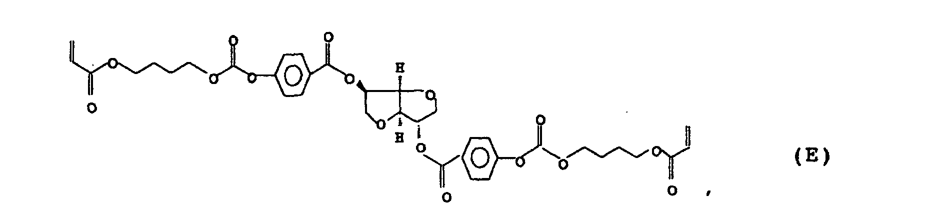

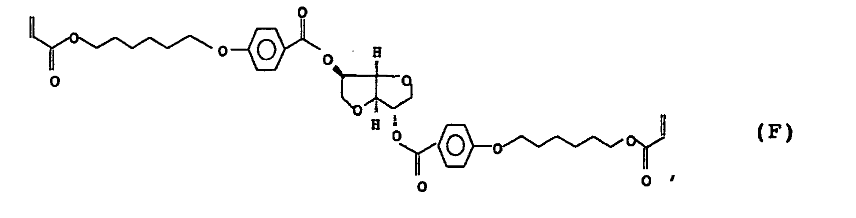

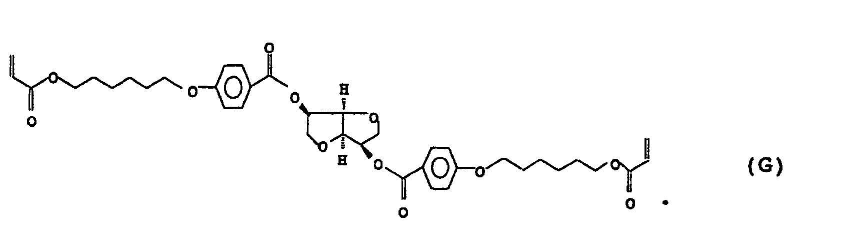

Als nichtlimitierende Beispiele für geeignete Nematen können folgende Verbindungen der Formeln (H) und (K) genannt werden: 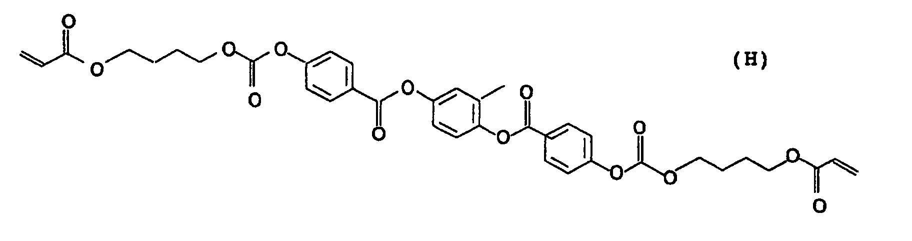 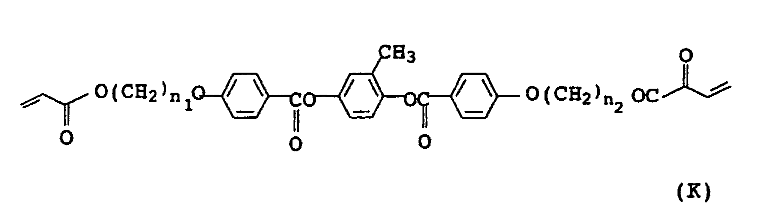 worin n₁ und n₂ unabhängig voneinander für 2, 3, 4 oder 6 stehen, wobei das Monomer der Formel (K) vorzugsweise als Gemisch von Verbindungen mit n₁/n₂ gleich 2/3, 2/4, 2/6, 3/4, 3/6, 4/4, 4/6, 6/4 und 6/6 eingesetzt wird. In den Verbindungen der Formeln (H) und (K) kann der Methylsubstituent am zentralen Benzolkern gegebenenfalls auch durch ein Wasserstoffatom ersetzt sein.

Polymerisiert man die erfindungsgemässen Verbindungen oder Flüssigkristallzusammensetzungen, so lässt sich der flüssigkristalline Ordnungszustand fixieren. Die Polymerisation kann je nach polymerisierbarer Gruppe z.B. thermisch oder photochemisch erfolgen. Zusammen mit den erfindungsgemässen Verbindungen oder Flüssigkristallzusammensetzungen lassen sich dabei auch andere Monomere copolymerisieren. Diese Monomeren können andere polymerisierbare flüssigkristalline Verbindungen, chirale Verbindungen, die ebenfalls bevorzugt kovalent einpolymerisiert werden, oder übliche Vernetzungsmittel wie mehrfachvalente Acrylate, Vinylverbindungen oder Epoxide sein. Besonders im Fall von Isocyanaten, Isothiocyanaten oder Epoxiden als polymerisierbare Flüssigkristallverbindungen ist das Vernetzungsmittel bevorzugt ein mehrfachvalenter Alkohol, so dass beispielsweise Urethane gebildet werden können. Das Vernetzungsmittel muss in seiner Menge so an die Polymerisationsverhältnisse angepasst werden, dass einerseits eine zufriedenstellende mechanische Stabilität erreicht wird, andererseits aber das flüssigkristalline Phasenverhalten nicht beeinträchtigt wird. Die Menge des Vernetzungsmittels hängt daher von der speziellen Anwendung der Polymerisate ab. Zur Herstellung von Pigmenten ist eine grössere Menge Vernetzungsmittel vorteilhaft, zur Herstellung thermoplastischer Schichten oder z.B. für Display-Orientierungsschichten ist eine geringere Menge Vernetzungsmittel erforderlich. Die Menge des Vernetzungsmittels kann durch einige Vorversuche ermittelt werden.

Eine weitere Modifizierung der aus den erfindungsgemässen Verbindungen oder Flüssigkristallzusammensetzungen hergestellten Polymerisationsprodukte ist durch die Zugabe polymerer Hilfsstoffe vor der Polymerisation möglich. Solche Hilfsstoffe sollten vorzugsweise entweder in den Ausgangsmischungen löslich sein oder aber in einem mit den Ausgangsmischungen verträglichen organischen Lösungsmittel. Typische Vertreter solcher polymerer Hilfsstoffe sind z.B. Polyester, Celluloseester, Polyurethane sowie polyether- oder polyestermodifizierte oder auch unmodifizierte Silikone. Die für den gewünschten Zweck gegebenenfalls zuzugebende Menge an polymerem Hilfsstoff, seine chemische Natur sowie möglicherweise noch Menge und Art eines Lösungsmittels sind dem Fachmann in der Regel geläufig oder lassen sich ebenfalls experimentell durch wenige Vorversuche ermitteln.

Neben den Verbindungen der Formeln Ia bis Ie können noch weitere Verbindungen zugemischt werden, welche nichtkovalent in das polymere Netzwerk eingebaut werden. Dies können beispielsweise kommerziell erhältliche nematische Flüssigkristalle sein.

Weitere Zusatzstoffe können auch Pigmente, Farbstoffe sowie Füllstoffe sein.

Bei den Pigmenten können dies sein anorganische Verbindungen wie beispielsweise Eisenoxide, Titanoxid und Russ, bei den organischen Verbindungen z.B. Pigmente oder Farbstoffe aus den Klassen der Monoazopigmente, Monoazofarbstoffe sowie deren Metallsalze, Disazopigmente, kondensierte Disazopigmente, Isoindolinderivate, Derivate der Naphthalin- oder Perylentetracarbonsäure, Anthrachinonpigmente, Thioindigoderivate, Azomethinderivate, Chinacridone, Dioxazine, Pyrazolochinazolone, Phthalocyaninpigmente oder basische Farbstoffe wie Triarylmethanfarbstoffe und deren Salze.

Vor der Auftragung werden die flüssigkristallinen Materialien in einem leichtflüchtigen Lösungsmittel gelöst und gegebenenfalls mit notwendigen Additiven kombiniert. Als Additive können Polymerisationsinhibitoren beziehungsweise -initiatoren, Verlaufshilfsmittel, Entlüfter, Haftmittel, Bindemittel, Dispergiermittel etc. eingesetzt werden.

Die cholesterischen Schichten sowie die gegebenenfalls vorhandene Release-Schicht werden hergestellt, indem man auf einen, vorzugsweise beweglichen, Träger eine Schicht des gegebenenfalls reaktiven, giessfähigen cholesterischen Gemischs, vorzugsweise durch Giessen, aufbringt und eine feste Cholesterenschicht ausbildet. Vorzugsweise trägt man das reaktive, giessfähige cholesterische Gemisch in der isotropen Phase auf. In einer bevorzugten Ausführungsform verdünnt man das reaktive, giessfähige cholesterische Gemisch vor dem Giessen und bildet die feste Cholesterenschicht gegebenenfalls unter (d.h. während oder nach) Entfernen des Verdünnungsmittels aus. Die Ausbildung der festen Cholesterenschicht kann durch Vernetzung, durch Polymerisation oder durch schnelles Abkühlen unter die Glasübergangstemperatur (Einfrieren der cholesterischen Phase) erfolgen, wobei unter Vernetzung die kovalente Verknüpfung polymerer Verbindungen und unter Polymerisation die kovalente Verknüpfung monomerer Verbindungen zu Polymeren verstanden wird. Unter Härtung wird Vernetzung, Polymerisation oder das Einfrieren der cholesterischen Phase verstanden. Ein Gemisch wird im Rahmen der vorliegenden Erfindung als reaktiv bezeichnet, wenn wenigstens eine in dem Gemisch enthaltene Verbindung zur Ausbildung kovalenter Verknüpfungen befähigt ist.

Der bewegliche Träger ist vorzugsweise bandförmig und besteht z.B. aus einer Metall-, Papier- oder Kunststofffolienbahn. Das cholesterische Gemisch wird vorzugsweise mit einem Anteil an Verdünnungsmittel von etwa 5 bis 95 Gew.-%, insbesondere etwa 30 bis 80 Gew.-%, insbesondere etwa 40 bis 70 Gew.-%, besonders bevorzugt etwa 55 bis 60 Gew.-%, jeweils bezogen auf das Gesamtgewicht des aufzubringenden Gemischs, aufgetragen.

In dem erfindungsgemässen Verfahren einsetzbare Verdünnungsmittel sind beispielsweise lineare oder verzweigte Ester, besonders Essigsäureester wie Ethyl- und Butylacetat, cyclische Ether und Ester, Alkohole, Lactone, aliphatische und aromatische Kohlenwasserstoffe, wie Toluol, Xylol und Cyclohexan, sowie Ketone, Amide, N-Alkylpyrrolidone, besonders N-Methylpyrrolidon, und insbesondere Tetrahydrofuran (THF), Dioxan und Methylethylketon (MEK). Bevorzugt sind organische Verdünnungsmittel mit einem Siedepunkt von unter 140°C.

Geeignete Verdünnungsmittel sind weiterhin beispielsweise Ether und cyclische Ether wie Tetrahydrofuran oder Dioxan, chlorierte Kohlenwasserstoffe, wie Dichlormethan, 1,1,2,2-Tetrachlorethan, 1-Chlornaphthalin, Chlorbenzol oder 1,2-Dichlorbenzol. Diese Verdünnungsmittel sind besonders für Polyester und Polycarbonate geeignet. Geeignete Verdünnungsmittel für Cellulosederivate sind beispielsweise Ether, wie Dioxan oder Ketone, wie Aceton. Werden Copolyisocyanate als Polymere der Gruppe d) eingesetzt, ist es sinnvoll, polymerisierbare Verdünnungsmittel, wie in der US-A-08,834,745 beschrieben, zu verwenden. Solche polymerisierbaren Verdünnungsmittel sind beispielsweise
- Ester α,β-ungesättigter Mono- oder Dicarbonsäuren, insbesondere C₃-C₆-Mono- oder Dicarbonsäuren, mit C₁-C₁₂-Alkanolen, C₂-C₁₂-Alkandiolen oder deren C₁-C₆-Alkylether und Phenylether, beispielsweise Acrylate und Methacrylate, Hydroxyethyl- oder Hydroxypropylacrylat oder - methacrylat sowie 2-Ethoxyethylacrylat oder -methacrylat;
- Vinyl-C₁-C₁₂-alkylether, wie Vinylethyl-, Vinylhexyl- oder Vinyloctylether;
- Vinylester von C₁-C₁₂-Carbonsäuren, wie Vinylacetat, Vinylpropionat Vinyllaurat;
- C₃-C₉-Epoxide, wie 1,2-Butylenoxid, Styroloxid;
- N-Vinylpyrrolidon, N-Vinylcaprolactam, N-Vinylformamid;
- vinylaromatische Verbindungen, wie Styrol, α-Methylstyrol, Chlorstyrol und
- Verbindungen mit zwei oder mehreren vernetzbaren Gruppen wie Diester von Diolen (einschliesslich Polyethylenglykole) mit Acryl- oder Methacrylsäure oder Divinylbenzol.

Beispiele für bevorzugte polymerisierbare Verdünnungsmittel sind 2-Ethoxyethylacrylat, Diethylenglykoldiacrylat, Ethylenglykoldimethacrylat, Diethylenglykoldimethacrylat, Triethylenglykoldimethacrylat, Diethylenglykolmonomethyletheracrylat, Phenoxyethylacrylat und Tetraethylenglykoldimethacrylat. Ein besonders bevorzugtes polymerisierbares Verdünnungsmittel ist Styrol.

Auch die Gemische können in kleinen Mengen polymerisierbare Verdünnungsmittel zusätzlich zu dem inerten Verdünnungsmittel enthalten. Bevorzugte zusetzbare, polymerisierbare Lösungsmittel sind Acrylate, insbesondere höherfunktionelle Acrylate wie Bis-, Tris- oder Tetraacrylate, besonders bevorzugt hochsiedende Oligoacrylate. Die bevorzugte Zusatzmenge liegt bei etwa 5 Gew.-%, bezogen auf das Gesamtgewicht des Gemischs.

Gegebenenfalls kann auch Wasser dem Verdünnungsmittel zugesetzt sein oder sogar als alleiniges Verdünnungsmittel eingesetzt werden.

Das vernetzbare oder polymerisierbare Gemisch kann für die photochemische Polymerisation handelsübliche Photoinitiatoren enthalten. Für eine Härtung durch Elektronenstrahlen sind solche nicht notwendig. Geeignete Photoinitiatoren sind beispielsweise Isobutyl-benzoinether, 2,4,6-Trimethylbenzoyldiphenyl-phosphinoxid, 1-Hydroxycyclohexyl-phenylketon, 2-Benzyl-2-dimethylamino-1-(4-morpholinophenyl)-furan-1-on, Mischungen von Benzophenon und 1-Hydroxycyclohexyl-phenylketon, 2,2-Dimethoxy-2-phenylacetophenon, perfluorierte Diphenyltitanocene, 2-Methyl-1-(4-[methylthio]phenyl)-2-(4-morpholinyl)-1-propanon, 2-Hydroxy-2-methyl-1-phenyl-propan-1-on, 4-(2-Hydroxyethoxy)phenyl-2-hydroxy-2-propylketon, 2,2-Diethoxyacetophenon, 4-Benzoyl-4'-methyldiphenyl-sulfid, Ethyl-4-(dimethylamino)benzoat, Mischungen von 2-Isopropylthioxanthon und 4-Isopropyl-thioxanthon, 2-(Dimethylamino)ethylbenzoat, d,l-Campherchinon, Ethyl-d,1-campherchinon, Mischungen von Benzophenon und 4-Methylbenzophenon, Benzophenon, 4,4'-Bisdimethylamin-benzophenon, (η⁵-Cyclapentadienyl)(η⁶-Isopropylphenyl)-eisen(II)-hexafluoro-phosphat, Triphenylsulfonium-hexafluorophosphat oder Mischungen von Triphenylsulfoniumsalzen, sowie Butandioldiacrylat, Dipropylenglykoldiacrylat, Hexandioldiacrylat, 4-(1,1-Dimethylethyl)cyclohexylacrylat, Trimethylolpropantriacrylat und Tripropylenglykoldiacrylat.

Die Brillanz der Pigmentschicht kann durch Zugabe geringer Mengen geeigneter Verlaufsmittel gesteigert werden. Einsetzbar sind etwa 0,005 bis 1 Gew.-%, insbesondere 0,01 bis 0,5 Gew.-%, bezogen auf die Menge an eingesetztem Cholester. Geeignete Verlaufsmittel sind beispielsweise Glykole, Siliconöle und insbesondere Acrylatpolymere, wie die unter der Bezeichnung Byk 361 bzw. Byk 358 der Firma Byk-Chemie erhältlichen Acrylatcopolymere und die unter der Bezeichnung Tego flow ZFS 460 der Fa. Tego erhältlichen modifizierten silikonfreien Acrylatpolymere.

Gegebenenfalls enthält das polymerisierbare oder vernetzbare Gemisch auch Stabilisatoren gegen UV- und Wettereinflüsse. Hierfür eignen sich zum Beispiel Derivate des 2,4-Dihydroxybenzophenons, Derivate des 2-Cyan-3,3-diphenylacrylates, Derivate des 2,2',4,4'-Tetrahydroxybenzophenons, Derivate des Orthohydroxyphenylbenztriazols, Salicylsäureester, Orthohydroxyphenyl-s-triazine oder sterisch gehinderte Amine. Diese Stoffe können allein oder vorzugsweise in Form von Gemischen eingesetzt werden.

Vorzugsweise weist das giessfähige, reaktive cholesterische Gemisch eine Viskosität im Bereich von etwa 0,1 bis 50 mPas, insbesondere etwa 1 bis 10 mPas, gemessen bei 23°C, auf.

Besonders bevorzugt bringt man das cholesterische Gemisch mit einer Geschwindigkeit von etwa 1 bis 800 m/min, insbesondere etwa 5 bis 100 m/min, auf den Träger auf.

In einer bevorzugten Ausführungsform des Verfahrens wird das Gemisch mittels eines roll coaters, reverse roll coaters, knife reverse roll coaters, slot die, eines kiss coaters oder insbesondere mittels eines Extrusionsgiessers, Rakelgiessers oder Messergiessers, ganz besonders bevorzugt mittels eines Rakelgiessers oder Messergiessers, auf die Unterlage aufgebracht.

Vorteilhaft wird das Gemisch mittels einer Giessvorrichtung aufgetragen, die das Gemisch beim Auftragen einem hohen Schergefälle unterwirft. Massnahmen zur Beeinflussung des Schergefälles sind dem mit Giessvorrichtungen vertrauten Fachmann geläufig.

Vorzugsweise wird eine Giessvorrichtung verwendet deren Giessspaltbreite im Bereich von etwa 2 bis 50 µm, insbesondere etwa 4 bis 15 µm liegt. Vorteilhaft ist ausserdem, bei einem Giesserüberdruck von etwa 0,01 bis 0,7 bar, vorzugsweise 0,05 bis 0,3 bar zu arbeiten.

Besonders geeignete Vorrichtungen zur Herstellung cholesterischer Schichten sind Beschichtungsmaschinen mit Messergiesser-Auftragswerk mit denen sich ein cholesterisches Gemisch auf eine Trägerfolie die über eine mit sehr hoher Rundlaufgenauigkeit laufende Walze geführt wird, aufbringen lässt. Vorteilhafterweise ist das Giessmesser auf einen Präzisionsschlitten montiert, so dass sich ein definierter Spalt gegen die Trägerfolie genau einstellen lässt.

Die aufgetragene Schicht wird durch eine Trockenvorrichtung, beispielsweise durch einen Umlufttrockner, getrocknet und anschliessend, oder anstelle des Trocknens, thermisch, durch UV-Strahlen oder durch Elektronenstrahlen polymerisiert bzw. vernetzt, wobei die Härtung durch UV-Strahlung oder durch Elektronenstrahlen bevorzugt ist.

Die aufgetragene Schicht wird vorzugsweise bis zu einem Restgehalt an flüchtigen Verdünnungsmitteln von weniger als 1 Gew.-%, bezogen auf das Trockengewicht der aufgebrachten Schicht, getrocknet. Die Trocknung erfolgt vorzugsweise bei einer Temperatur im Bereich von 20 bis 100°C über einen Zeitraum von etwa 1 bis 120 Sekunden. Die optimalen Trocknungsbedingungen können dabei an die jeweils verwendete Schichtdicke und Beschichtungsgeschwindigkeit angepasst werden. Auf diese Weise erhält man z.B. gehärtete cholesterische Schichten mit einer mittleren Trockenschichtdicke von 0,2 bis 1 µm. Die Mindesttrockendicke entspricht der Pitchhöhe, das heisst dem Verhältnis von Reflexions-Wellenlänge zu Brechungsindex.

Die erfindungsgemäss hergestellten cholesterischen Schichten weisen eine mittlere Schichtdickenschwankung von 50 nm oder darunter, wie z.B. weniger als 40, 30, 20 oder 10 nm, auf, was eine hohe Farbkonstanz der cholesterischen Schicht zur Folge hat. Die mittlere Schichtdickenschwankung kann in einfacher Weise, wie z.B. mikroskopisch anhand von Dünnschnitten bestimmt werden. Eine geeignete Bestimmungsmethode kann beispielsweise in Anlehnung an die in der EP-A-0 566 100 beschriebene Methodik durchgeführt werden.

Als Bindemittel für die Releaseschicht sowie für die cholesterischen Schichten sind auch monomere Mittel und deren Mischungen mit polymeren Bindemitteln einsetzbar. Als monomere Mittel kommen bevorzugt solche in Betracht, die zwei oder mehr vernetzungsfähige Gruppen wie Acryl-, Methacryl-, α-Chloracryl-, Vinyl-, Vinylether-, Epoxid-, Cyanat-, Isocyanat- oder Isothiocyanatgruppen enthalten. Besonders bevorzugt sind Acryl-, Methacryl- oder Vinylethergruppen. Monomere Mittel mit zwei vernetzungsfähigen Gruppen sind beispielsweise die Diacrylate, die Divinylether oder die Dimethacrylate von Diolen wie beispielsweise Propandiol, Butandiol, Hexandiol, Ethylenglykol, Diethylenglykol, Triethylenglykol oder Tetrapropylenglykol.

Monomere Mittel mit drei vernetzungsfähigen Gruppen sind beispielsweise die Triacrylate, die Trivinylether oder die Trimethacrylate von Triolen wie beispielsweise Trimethylolpropan, ethoxyliertem Trimethylolpropan mit 1 bis 20 Ethylenoxideinheiten, propoxyliertem Trimethylolpropan mit 1 bis 20 Propylenoxideinheiten, gemischt ethoxyliertem und propoxyliertem Trimethylolpropan, bei dem die Summe aus Ethylenoxideinheiten und Propylenoxideinheiten 1 bis 20 beträgt. Monomere Mittel mit drei vernetzungsfähigen Gruppen sind beispielsweise auch die Triacrylate, die Trivinylether oder die Trimethacrylate von Glycerin, ethoxyliertem Glycerin mit 1 bis 20 Ethylenoxideinheiten, propoxyliertem Glycerin mit 1 bis 20 Propylenoxideinheiten, gemischt ethoxyliertem und propoxyliertem Glycerin, bei dem die Summe aus Ethylenoxideinheiten und Propylenoxideinheiten 1 bis 20 beträgt.

Monomere Mittel mit vier vernetzungsfähigen Gruppen sind beispielsweise die Tetraacrylate, die Tetravinylether oder die Tetramethacrylate von Tetraolen wie beispielsweise Bis-trimethylolpropan, ethoxyliertem Bis-trimethylolpropan mit 1 bis 20 Ethylenoxideinheiten, propoxyliertem Bis-trimethylolpropan mit 1 bis-20 Propylenoxideinheiten, gemischt ethoxyliertem und propoxyliertem Bis-trimethylolpropan, bei dem die Summe aus Ethylenoxideinheiten und Propylenoxideinheiten 1 bis 20 beträgt. Monomere Mittel mit vier vernetzungsfähigen Gruppen sind beispielsweise auch die Tetraacrylate, die Tetravinylether oder die Tetramethacrylate von Tetraolen wie beispielsweise Pentaerythrit, ethoxyliertem Pentaerythrit mit 1 bis 20 Ethylenoxideinheiten, propoxyliertem Pentaerythrit mit 1 bis 20 Propylenoxideinheiten, gemischt ethoxyliertem und propoxyliertem Pentaerythrit, bei dem die Summe aus Ethylenoxideinheiten und Propylenoxideinheiten 1 bis 20 beträgt.

Zur Erhöhung der Reaktivität bei der Vernetzung oder Polymerisation an Luft können die Bindemittel und die monomeren Mittel 0,1 bis 10% eines primären oder sekundären Amins enthalten. Beispiele für geeignete Amine sind Ethanolamin, Diethanolamin oder Dibutylamin.

Die Herstellung der pigmenthaltigen Zusammensetzungen kann nach den üblichen, in der Fachwelt bekannten Dispergierverfahren und unter Verwendung von Verdünnungsmitteln, Dispergiermitteln, Photoinitiatoren und gegebenenfalls weiteren Additiven erfolgen.

Als Verdünnungsmittel können Wasser oder organische Flüssigkeiten oder deren Mischungen verwendet werden, wobei organische Flüssigkeiten bevorzugt sind. Besonders bevorzugt sind organische Flüssigkeiten mit einem Siedepunkt unterhalb von 140°C, insbesondere Ether, wie Tetrahydrofuran, Ketone, wie Ethylmethylketon und Ester, wie Butylacetat.

Als Dispergiermittel können niedermolekulare Dispergiermittel, wie beispielsweise Stearinsäure oder auch polymere Dispergiermittel verwendet werden. Geeignete polymere Dispergiermittel oder Dispergierharze sind dem Fachmann bekannt. Insbesondere sind zu nennen sulfonatgruppen-, phosphatgruppen-, phosphonatgruppenoder carboxylgruppenhaltige Polyurethane, carboxylgruppenhaltige vinylchloridcopolymere, Polyiminpolyester oder Polyetheracrylate mit oder ohne eingebaute funktionelle Gruppen.

Für die Herstellung von vernetzbaren oder polymerisierbaren pigmenthaltigen Zusammensetzungen können für die photochemische Polymerisation handelsübliche Photoinitiatoren verwendet werden, beispielsweise die oben für die photochemische Polymerisation der cholesterischen Gemische aufgeführten Photoinitiatoren.

Die erfindungegemässen Schichtmaterialien und Pigmente können grundsätzlich folgende Schichtenfolge aufweisen:
1) gegebenenfalls einen ersten Träger
2) gegebenenfalls eine Releaseschicht,
3) mindestens eine cholesterische Farbeffektschicht,
4) gegebenenfalls eine transmittierendes Licht teilweise oder vollständig absorbierende Schicht,
5) gegebenenfalls einen zweiten, nachträglich auf die Cholesterschicht, z.B. durch Kaschieren, aufgetragenen Träger.

Als Träger dienen vorzugsweise bekannte, vorzugsweise thermoplastische, Filme aus Polyestern, wie Polyethylenterephthalat oder Polyethylennaphthalat sowie Polyolefinen, Cellulosetriacetat, Polycarbonaten, Polyamiden, Polyimiden, Polyamidoimiden, Polysulfonen, Aramiden oder aromatischen Polyamiden. Die Dicke der Träger beträgt vorzugsweise etwa 5 bis 100 µm, insbesondere etwa 10 bis 20 µm. Der Träger kann vor der Beschichtung einer Koronaentladungsbehandlung, einer Plasmabehandlung, einer leichten Adhäsionsbehandlung, einer Wärmebehandlung, einer Staubentfernungsbehandlung oder ähnlichem unterworfen werden. Der Träger weist vorzugsweise eine mittlere Mittellinien-Oberflächenrauhigkeit von 0,03 µm oder weniger, insbesondere von 0,02 µm oder weniger, besonders bevorzugt von 0,01 µm oder weniger auf. Das Rauhigkeitsprofil der Oberfläche des Trägers kann durch Füllstoffe, die dem Schichtträger bei dessen Herstellung zugesetzt werden, variiert werden. Beispiele für geeignete Füllstoffe sind Oxide und Carbonate von Ca, Si und Ti sowie organische feine Pulver von Acrylsubstanzen.

Der Träger kann auch eine metallisierte Folie oder ein vorzugsweise poliertes Metallband sein, das beispielsweise auch als Endlosband ausgebildet sein kann.

Das Verfahren zur Herstellung eines erfindungsgemässen cholesterischen Schichtmaterials wird vorzugsweise wie folgt durchgeführt.
a) In einem ersten Schritt wird eine Releaseschicht auf einen Schichtträger mittels einer der oben genannten Giessvorrichtungen aufgetragen, getrocknet und gehärtet. Die Schichtdicke dieser Releaseschicht beträgt etwa 0,5 bis 20 µm, insbesondere etwa 0,5 bis 10 µm, besonders bevorzugt etwa 0,5 bis 3 µm. Die Releaseschicht kann eine cholesterische Schicht sein oder eine bindemittelhaltige Schicht mit einem Bindemittel, das mit bekannten Methoden gehärtet bzw. vernetzt wird. Das giessfähige Gemisch für die Releaseschicht weist vorzugsweise eine Viskosität im Bereich von etwa 1 bis 500 mPas auf, insbesondere etwa 10 bis 100 mPas, gemessen bei 23°C. Besonders bevorzugt bringt man das Gemisch mit einer Geschwindigkeit von etwa 1 bis 800 Meter pro Minute, insbesondere etwa 5 bis 100 Meter pro Minute auf den Schichtträger. Die Härtung bzw. Vernetzung geschieht vorzugsweise durch Eletronenstrahl- oder UV-Bestrahlung.
   Die Haftung der Releaseschicht auf dem Träger beträgt mindestens 1 cN, vorzugsweise mindestens 3 cN und besonders bevorzugt mindestens 10 cN, was durch die Einstellung der Temperatur und der Bestrahlungsintensität bei der Vernetzung einstellbar ist. Bei UV-Härtung beträgt die Temperatur der zu härtenden Schicht mindestens 80°C, vorzugsweise mindestens 90°C, die Dauer der Bestrahlung liegt im Bereich von 5 bis 500 ms, bei einer Strahlerleistung von etwa 50 bis 200 Watt/cm.
   Die Einstellung einer hohen Haftkraft ist mit zwei Vorteilen verbunden:
   - Es findet keine störende Diffusion von Bestandteilen des Trägers oder der Releaseschicht in die darüberliegenden cholesterischen Schichten statt;
   - nach dem Ablösen der cholesterischen Schichten von der auf dem Träger verbleibenden Releaseschicht ist dieser für weitere Beschichtungsvorgänge verwendbar.
b) Anschliessend wird eine erste cholesterische Schicht mit dem gewünschten Cholester oder -gemisch auf die Releaseschicht aufgebracht, getrocknet und gehärtet. Die für die Herstellung der Cholesterschicht verwendete Beschichtungsmasse besitzt vorzugsweise eine vergleichbare oder identische Zusammensetzung wie die Beschichtungsmasse für die Releaseschicht. Die Trockenschichtdicke dieser Schicht liegt z.B. im Bereich von etwa 0,2 bis 1 µm, die Mindestschichtdicke entspricht der Pitchhöhe.
c) In einem nächsten Schritt wird gegebenenfalls eine zweite cholesterische Schicht auf die erste cholesterische Schicht aufgebracht, wobei die Schichtdicke wie bei b) bemessen ist, dann wird wie bei b) getrocknet und gehärtet. Der Giessvorgang erfolgt bevorzugt analog zur Herstellung von b). Auf diese Weise kann eine beliebig grosse Anzahl weiterer cholesterischer Schichten analog aufgetragen werden.
   Die Härtung bzw. Vernetzung der cholesterischen Schichten wird vorzugsweise unter den gleichen Bedingungen wie bei der Releaseschicht durchgeführt. Dabei resultiert für die Haftung jeder der cholesterischen Schichten auf der jeweils unteren Schicht, also z.B. der Releaseschicht oder einer anderen cholesterischen Schicht, ein Wert, welcher im Bereich von kleiner als 1 cN, bevorzugt im Bereich von 0,1 bis 0,8 cN liegt. Dadurch sind die cholesterischen Schichten überraschend problemlos von der Releaseschicht und gegebenenfalls voneinander separierbar. Durch Variation von Bestrahlungsintensität und/oder Temperatur kann die Haftung der cholesterischen Schichten untereinander bedarfsgerecht eingestellt werden.
d) Anschliessend können die cholesterischen Schichten von der geträgerten Trägerschicht abgelöst und weiter verarbeitet werden.

Das Ablösen der cholesterischen Mehrschichtstruktur von der ersten Releaseschicht kann z.B. dadurch erfolgen, dass der Verbund über eine Umlenkrolle mit kleinem Durchmesser geführt wird. In Folge dessen blättert das vernetzte cholesterische Material von der Releaseschicht ab. Weitere bekannte Methoden sind gleichfalls geeignet, z.B. das Abziehen des Schichtträgers über eine scharfe Kante, mittels Airknife (Luftrakel), Anritzen des Schichtpakets und nachfolgendes Abblasen mittels Druckluft, Wasser- oder Dampfstrahl, Ultraschall,mechanisches Entfernen, wie z.B. Abrakeln, oder Kombinationen davon.

Das nun trägerlose cholesterische Mehrschichtmaterial kann gegebenenfalls durch Zerkleinerung auf die gewünschte Korngrösse zu einem Mehrschichtpigment verarbeitet werden. Dies kann beispielsweise durch Mahlen in Universalmühlen erfolgen. Die zerkleinerten Pigmente können anschliessend zur Einengung der Korngrössenverteilung, beispielsweise durch einen Siebprozess klassiert werden.

Die Farbshift-Stabilität der erfindungsgemässen Schichtmaterialien kann beispielsweise wie folgt bestimmt werden:

Ein Materialstück einer beschichteten Probe, z.B. bestehend aus Schichtträger, Releaseschicht und der oder den darauf beschichteten cholesterischen Schichten wird 15 Minuten in einem auf 80°C erwärmten Xylolbad behandelt und anschliessend getrocknet, was beispielsweise bei ungefähr 80°C während einer Stunde geschehen kann; danach wird das Reflexionsmaximum der so behandelten Probe im Vergleich zu einer unbehandelten Probe mit bekannten optischen Methoden bestimmt und der Farbshift daraus berechnet. Es wurde gefunden, dass dann, wenn dieser so gemessene Farbshift höchstens etwa 5 bis 10 nm, vorzugsweise weniger als 3 nm, beträgt, eine ausreichende Lösungsmittel- oder Temperaturstabilität des erfindungsgemässen cholesterischen Schichten gegeben ist. Insbesondere wurde unter diesen Bedingungen in einer üblichen Lackzusammensetzung mit einem erfindungsgemässen cholesterischen Pigment kein visuell erkennbarer Farbunterschied zwischen 80°C und 130°C Applikationstemperatur festgestellt.

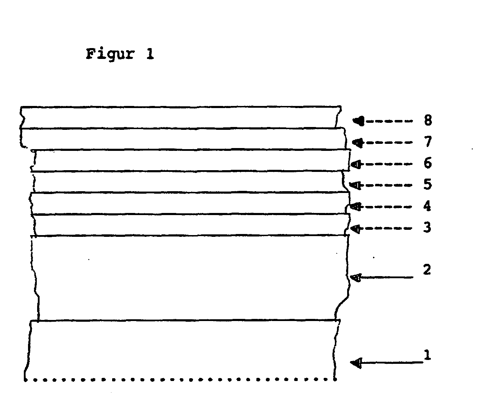

Die Erfindung wird nun unter Bezugnahme auf beiliegenden Figuren näher erläutert. Dabei zeigt
Figur 1 eine schematische Darstellung einer erfindungsgemässen Schichtkombination dar, bestehend aus einem Schichtträger 1, einer darauf aufgetragenen Releaseschicht 2 sowie den darüber beschichteten cholesterischen Schichten 3 bis 8.

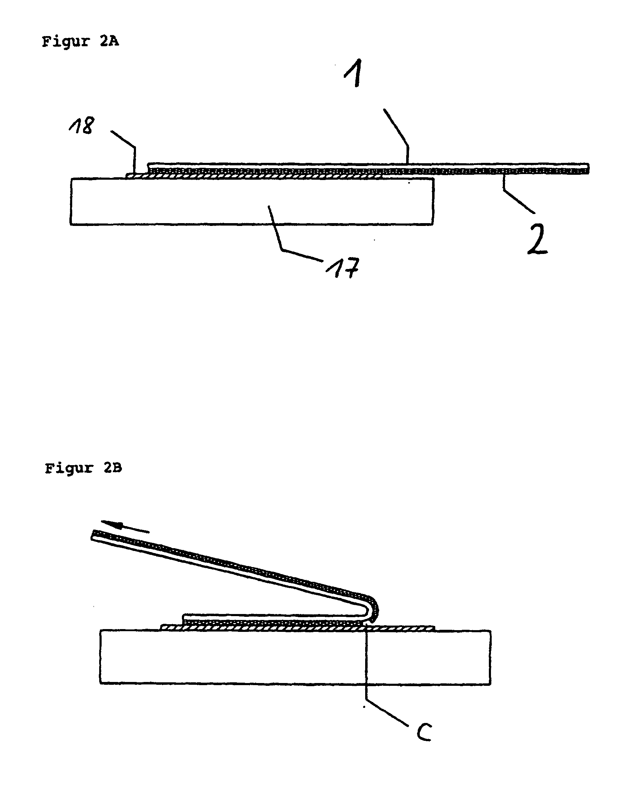

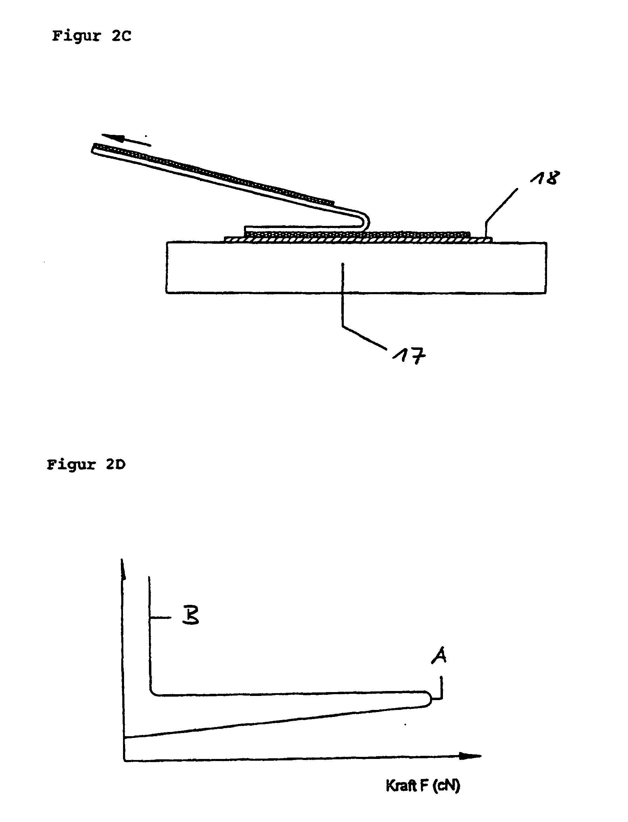

Figur 2 die Messung der Haftkraft. Auf einer ebenen Metallplatte 17 wird ein etwa 5 cm langes Stück Klebeband 18 fixiert. Als Klebeband 18 kann jedes handelsübliche Klebeband verwendet werden, das mit einer PET-Referenzfolie eine Haftkraft unter ansonst gleichen Messbedingungen von etwa 7,3 bis 7,9 cN, insbesondere etwa 7,6 cN, ergibt. Als PET-Referenzfolie dient hier eine PET-Folie, Typ E2R, der Firma Teijin, Dicke 9 µm, Breite 6,35 mm, Oberflächenrauhigkeit nach DIN 4768: Rz = 0,86 µm, nach DIN 4768/1: Ra = 0,012 µm, nach EP-B-0 032 710 (Interferenzkontrastverfahren): 75 bis 125 nm. Die Klebeschicht ist nach oben gerichtet und von der Platte abgewandt. Der zu messende Verbund, bestehend aus dem Schichtträger 1 und der Cholesterschicht 2 wird so aufgebracht, dass eine Cholesterschicht 2 mit der Klebeschicht des Klebebands 18 in Kontakt kommt, wie in Figur 2A dargestellt. Das freie Ende des Verbundes wird nun so abgebogen, dass es einen Winkel von 160° mit der Ebene der Metallplatte 17 bildet. Mit einer konstanten Geschwindigkeit von 0,1 mm pro Sekunde wird das freie gegen das aufgeklebte Bandende in Pfeilrichtung gezogen, wobei die Zugkraft im Band ständig zunimmt, bis der Schichtverbund an der Stelle C (Figur 2B) aufreisst. In der Figur 2D ist der Kraftverlauf dargestellt und der Punkt A ist der Abrisspeak des Schichtverbundes. Im weiteren Verlauf der Messung wird die Haftfestigkeit der Cholesterschicht 2 zum Träger 1 gemessen, wie in Figur 2C dargestellt. Im Kraftdiagramm Figur 2D bedeutet der Punkt B die Haftfestigkeit der Cholesterschicht auf dem Träger.

Die Zugspannungen im Schichtverbund werden mit einem hochauflösenden Sensor erfasst und als Abzugskraft in cN mit einem y-T-Schreiber registriert.
Figur 3 zeigt den Zusammenhang zwischen Farbshift und verschiedenen Härtungsbedingungen

### Beispiel 1: Herstellung von cholesterischem Schichtmaterial

### a) Herstellung einer cholesterischen Releaseschicht

Mit Hilfe einer Giessvorrichtung, wie sie in der deutschen Anmeldung Aktenzeichen 19738369.6 näher beschrieben ist, wird ein Gemisch bestehend aus 45 Teilen Cholesterenmischung (93,2% nematische Komponente gemäss Formel (K,n = 4) und 3,7% chirale Komponente gemäss Formel (D), 3 Teile Photoinitiator Irgacure® 907 (von Fa. Ciba-Geigy), 0,1 Teil Byk 361 (von Fa. Byk) und 55 Teile Methylethylketon) auf eine 15 µm dicke Polyesterfolie mit einer Giessgeschwindigeit von 10 m/min aufgebracht. Das giessfertige Gemisch hatte eine Viskosität von 6 mPas. Die beschichtete Folie wird dann durch einen Trockenkanal geführt, der auf 65°C temperiert ist. Anschliessend wird die physikalisch getrocknete Schicht in-line durch Bestrahlen mit UV-Licht mit einer Einwirkzeit von 120 ms unter Stickstoffatmosphäre gehärtet. Dazu wurde der Schichtverbund trägerseitig über eine auf 95°C temperierte Walze geführt, der gegenüberliegend auf einem Teil des Umfangs eine handelsübliche UV-Bestrahlungseinrichtung (Lampenleistung 120 Watt/min) angeordnet war. Die beschichtete Folie wird auf eine Spule gewickelt. Die Cholesterenschicht hat eine Dicke von 3 µm und reflektiert senkrecht zur Schichtebene Licht mit einem Maximum der Reflexion bei einer Wellenlänge von 505 nm. Mit dem Auge betrachtet erscheint die Schicht auf schwarzem Hintergrund bei senkrechtem Aufblick grün mit einem Farbwechsel nach blau, wenn man schräg auf die Schicht schaut. Haftkraft auf Träger > 7,6 cN.

### b) Herstellung der ersten cholesterischen Überbeschichtung

Es wurde analog verfahren wie unter a) beschrieben, nur wurden dem Cholesterengemisch 80 Teile Methylethylketon zugegegeben. Die viskosität betrug danach 3 mPas, gemessen bei 23°C. Die Giessgeschwindigkeit betrug 20 m/min; die Giesslösung wurde so auf die Releaseschicht aufgetragen, wobei die Trockenschichtdicke auf 0,8 µm eingestellt wurde. Die Trocknungs- und Härtungsbedingungen waren wie bei der Herstellung der Trägerschicht. Haftkraft auf Releaseschicht = 0,8 cN.

### c) Herstellung der zweiten cholesterischen Überbeschichtung

Es wurde in allen Parametern verfahren wie unter b), wobei die so hergestellte Schicht auf die erste cholesterische Schicht aufgetragen wurde. Haftkraft auf 1. cholesterischer Schicht = 1,5 cN.

### Beispiel 2: Herstellung eines cholesterischen Effektpigments

### a) Entfernen des Zweischichtverbundes von der Trägerfolie

Der gemäss Beispiel 1 hergestellte geträgerte Zweischichtverbund wird von der Polyesterträgerfolie entfernt, indem der Verbund quer zur Folienbahnrichtung mit einer Rasierklinge verletzt wird und dann mit Druckluft, die durch eine Schlitzdüse gepresst wird, abgeblasen wird. Die beschichtete Folie wird dabei kontinuierlich an der Schlitzdüse vorbeigeführt und der abgeblasene Zweischichtverbund wird in Form von Flocken aufgefangen. Die Zweischichtflocken sind 1,6 µm dick und zeigen auf beiden Seiten bei senkrechtem Aufblick eine kräftige grüne Farbe mit einem Farbwechsel nach blau, wenn man schräg auf die Flocken schaut.

### b) Mahlen der Zweischichtflocken zu einem Pigment

10 g Cholesterenflocken, hergestellt wie unter a) beschrieben, werden mit 100 g Natriumchlorid gemischt und 6 mal 2 Minuten in einer Schlagmessermühle gemahlen. Nach dem Mahlen wird das Salz mit Wasser herausgewaschen und das Pigment isoliert. Das so hergestellte Pigment besitzt, da die gegenseitige Haftung des Zweischichtverbundes relativ gering ist, nach dem Mahlvorgang eine Dicke von 800 nm und zeigt eine hervorragende Brillanz.

### Beispiel 3

Es wurde verfahren wie in Beispiel 1, jedoch wurde lediglich eine cholesterische Schicht auf der Releaseschicht aufgebracht (Haftkraft 0,6 cN).

### Beispiel 4

Es wurde verfahren wie im Beispiel 1, jedoch wurden 5 cholesterische Schichten nacheinander aufgetragen (Haftkraft der fünf Schichten untereinander 0,6 cN).

### Beispiel 5

Es wurde verfahren wie in Beispiel 3, jedoch wurde die cholesterische Schicht mit einer Trockenschichtdicke von 3,5 µm aufgetragen (Haftkraft 0,8 cN).

### Vergleichsbeispiel 1

Es wurde verfahren wie in Beispiel 3, jedoch wurde die Vernetzung der cholesterischen Schicht bei 23°C durchgeführt.

### Vergleichsbeispiel 2

Es wurde verfahren wie in Beispiel 3, jedoch wurde die Vernetzung der cholesterischen Schicht bei 60°C durchgeführt.

Die nachfolgende Tabelle zeigt das Ergebnis der Schichtproben, welche gemäss den Beispielen sowie den Vergleichsbeispielen erhalten wurden, bezüglich Farbshift nach Xyloltest und Brillanz.

Die oben jeweils angegebenen Haftungswerte betreffen die Haftung der cholesterischen Schicht auf der Trägerschicht. Die Haftung der Trägerschicht auf dem Schichtträger betrug bei allen Beispielen sowie Vergleichsbeispielen mehr als 8,6 cN.

**Tabelle 1**

| Probe gemäss | Brillanz | Farbshift |
|---|---|---|
| Beispiel 1 (Releaseschicht) | gut | - 1 nm |
| Beispiel 3 | gut | - 1 nm |
| Beispiel 4 | gut | - 4 nm |
| Beispiel 5 | schlecht | - 1 nm |
| vgl.bsp. 1 | gut | -22 nm |
| Vgl.bsp. 2 | gut | -19 nm |

Wurden analog den Beispielen 1 bis 4 die UV-Härtungstemperaturen bei 100°C statt bei 90°C durchgeführt, so wurden ebenfalls sehr gute Ergebnisse bezüglich Haftung d.h. Ablösung der cholesterischen Schicht(en) von der Releaseschicht, sowie Brillanz und Farbshift erzielt.

### Beispiel 6

100 g einer nematischen Verbindung der Formel (K,n = 4) wurden mit 3,25 g chiraler Verbindung der Formel (D), 103,25 g Tetrahydrofuran, 5 g einer 1%igen Lösung von Byk 361 in Tetrahydrofuran sowie 2 g Irgacure 184 zu einer klaren Lösung verrührt. Dieses Gemisch wurde mittels eines Messergiessers bei einem Giessüberdruck von 0,2 bar auf einen 14 µm dicken PET-Schichtträger mit einer Trockenschichtdicke von 2,5 µm beschichtet. Die Verweilzeit in der auf die Giessvorrichtung folgenden Trockenzone betrug 24 s bei 85°C. Die Giessgeschwindigkeit betrug 10m/min. Die Vernetzung erfolgte mit einer UV-Lampe mit 120 W/cm Leistung unter Stickstoffatmosphäre bei 100°C.

Die so erhaltene Schicht ergab auf einer schwarzen Unterlage einen tiefroten brillanten Eindruck mit einer starken Winkelabhängigkeit zu schwarz bei Schrägbetrachtung.

### Vergleichsbeispiel 3a

Es wurde verfahren wie in Beispiel 6, jedoch betrug die Temperatur während der Vernetzung 60°C.

### Vergleichsbeispiel 3b

Es wurde verfahren wie in Beispiel 6, jedoch betrug die Vernetzungstemperatur 25°C.

Um die Lösemittelbeständigkeit der vernetzten Schichten zu überprüfen, wurde jeweils ein Teststreifen mit einer Fläche von 2 x 5 cm bei einer Dauer von 15 min in einer auf 80°C gebrachten Xylollösung gebadet, anschliessend 60 min bei 80°C getrocknet und auf Farbveränderungen in einem handelsüblichen Spektrometer vermessen. Die dabei erhaltenen Ergebnisse zeigt die Tabelle 2. Ausserdem wurde die Haftkraft der cholesterischen Schichten auf dem Schichtträger gemessen.

**Tabelle 2**

| | Reflexionsmaxim um vor Behandlung | Reflexionsmaximum nach Behandlung | Haftkraft |
|---|---|---|---|
| Beispiel 6 | 721 nm | 721 nm | > 8 cN |
| Vgl.bsp. 3a | 715 nm | 703 nm | 0,7 cN |
| Vgl.bsp. 3b | 718 nm | 671 nm | 0,3 cN |

### Beispiel 7

100 g einer nematischen Verbindung der Formel (K,n = 4) wurden mit 4 g chiraler Verbindung der Formel (D), 104 g Tetrahydrofuran, 5 g einer 1%igen Lösung von Byk 361 in Tetrahydrofuran sowie 2 g Irgacure 184 zu einer klaren Lösung verrührt. Dieses Gemisch wurde mittels eines Messergiessers bei einem Giessüberdruck von 0,2 bar auf einen 14 µm dicken PET-Schichtträger mit einer Trokkenschichtdicke von 2,5 µm beschichtet. Die Verweilzeit in der auf die Giessvorrichtung folgenden Trockenzone betrug 24 s bei 85°C. Die Giessgeschwindigkeit betrug 10 m/min. Die Vernetzung erfolgte mit einer UV-Lampe mit 120 W/cm Leistung unter Stickstoffatmosphäre bei 100°C.

Die so erhaltene Schicht ergab auf einer schwarzen Unterlage einen grünen brillanten Eindruck mit einer starken Winkelabhängigkeit zu blau bei Schrägbetrachtung.

### Vergleichsbeispiel 4a

Es wurde verfahren wie in Beispiel 7, jedoch betrug die Temperatur während der Vernetzung 60°C.

### Vergleichsbeispiel 4b

Es wurde verfahren wie in Beispiel 7, jedoch betrug die Vernetzungstemperatur 25°C.

Um die Lösemittelbeständigkeit der vernetzten Schichten zu überprüfen, wurde jeweils ein Teststreifen mit einer Fläche von 2 x 5 cm bei einer Dauer von 15 min in einer auf 80°C gebrachten Xylollösung gebadet, anschliessend 60 min bei 80°C getrocknet und auf Farbveränderungen in einem handelsüblichen Spektrometer vermessen. Die dabei erhaltenen Ergebnisse zeigt die Tabelle 3. Ausserdem wurden die Haftkraft der cholesterischen Schichten auf dem Schichtträger gemessen.

**Tabelle 3**

| | Messung vor Behandlung | Messung nach Behandlung | Haftkraft |
|---|---|---|---|
| Beispiel 7 | 524 nm | 523 nm | > 8 cN |
| Vgl.bsp. 4a | 525 nm | 519 nm | 0,6 cN |
| Vgl.bsp. 4b | 525 nm | 506 nm | 0,3 cN |

### Beispiel 8

Zunächst wurde verfahren wie in Beispiel 6. Danach wurde auf die so erhaltene Schicht noch eine zweite cholesterische Schicht identischer Zusammensetzung und Dicke ebenfalls gemäss Beispiel 6 aufgetragen. Da die 1. Schicht, wie im Beispiel 6 gezeigt, sehr lösungsmittelresistent ist, wird beim Beguss der 2. Schicht die 1. Schicht nicht angelöst, was sich in einer niedrigen Haftung der 2. auf der 1. Schicht wiederspiegelt (vgl. Tabelle 4).

**Tabelle 4**

| | Schichtdicke | Haftkraft |
|---|---|---|
| 2. cholesterische Schicht | 2,5 µm | 0,4 cN |
| 1. cholesterische Schicht | 2,5 µm | > 8 cN |
| PET-Schichtträger | 14 µm | |

### Vergleichsbeispiel 5

Es wurde verfahren wie im Beispiel 8, jedoch wurde die 1. cholesterische Schicht bei 60° UV - gehärtet. Die mit diesem Schichtverbund erhaltenen Haftfestigkeiten zeigt die Tabelle 5.

**Tabelle 5**

| | Schichtdicke | Haftkraft |
|---|---|---|
| 2. cholesterische Schicht | 2,5 µm | 2,3 cN |
| 1. cholesterische Schicht | 2,5 µm | 0,7 cN |
| PET-Schichtträger | 14 µm | |

Wegen der erhöhten Haftfestigkeit der 2. auf der 1. Schicht sind beide nur zusammen vom Schichtträger abtrennbar. Der abgelöste Schichtverbund zeigt nach dem oben beschriebenen Mahlvorgang nur einen mässigen Delaminierungsgrad, das heisst bei einer mikroskopischen Betrachtung des Verbundes werden vermehrt zusammenhängende Zweischichtflocken beobachtet.

### Beispiel 9

Die gemäss Beispiel 8 und den Vergleichsbeispielen 3a, 3b, 4a und 4b erhaltenen cholesterischen Schichten wurden mittels Luftmesser vom Schichtträger abgetrennt und jeweils zu Pigmenten mit einer Flockengrösse von 35 µm gemahlen. Diese Pigmente wurden in eine Spritzrezeptur, bestehend aus einem mit Melamin vernetzten CABhaltigen Einbrennlack mit einem Festkörpergehalt von 20% und einem Lösemittelgehalt von 80%, bestehend aus einer Mischung von Xylol, Butylacetat, Essigester eingearbeitet. Die Mischung wurde auf ein schwarzes Musterblech mit einer Trockenschichtdicke von 25 µm gespritzt, wobei die Pigmentkonzentration jeweils 4% betrug. Danach wurden die Beschichtungen Einbrenntemperaturen von 80, 130 sowie 160°C bei einer Einbrennzeit von jeweils 30 min unterzogen. Die nachfolgende Tabelle 6 zeigt die dabei auftretenden Wellenlängenänderungen, die mit einem handelsüblichen Spektrometer gemessen wurden.
(CAB = Celluloseacetatbutyrat)

**Tabelle 6**

| Probe | Änderungen der Wellenlänge bei Einbrenntemperatur | |
|---|---|---|
| | 80°C zu 130°C | 80°C zu 160°C |
| Beispiel 8 | 0 nm | 0 nm |
| Vgl.bsp. 3a | - 4 nm | - 4 nm |
| Vgl.bsp. 3b | - 10 nm | - 10 nm |
| Vgl.bsp. 4a | - 3 nm | - 4 nm |
| Vgl.bsp. 4b | - 13 nm | - 13 nm |

### Beispiel 10: Untersuchung des Einflusses der Strahlungsdauer sowie der Strahlungsleistung auf die Farbshift-Beständigkeit.

Schichten im Dickebereich um 1 µm können bei vorteilhaft hoher Giessgeschwindigkeit beschichtet werden. Damit verringert sich auch die Verweilzeit in der Härtungszone. Der Einfluss einer erhöhten Giessgeschwindigkeit unter ansonsten gleichen Bedingungen auf die Farbshift-Beständigkeit der erhaltenen cholesterischen Schichten soll in folgender Versuchsreihe untersucht werden. Ausserdem soll überprüft werden, ob durch Veränderung der Strahlungsleistung die Farbshift-Beständigkeit ebenfalls beeinflusst werden kann.

Zur Durchführung der Versuchsreihe stellt man eine Beschichtungsmasse folgender Zusammensetzung her:
- 9,55 g: Nemat der Formel (H)
- 23,33 g: THF, NaOH getrocknet
- 0,45 g: Verdriller der Formel (B)
- 0,10 g: Byk 361, 10%ig in THF
- 0,20 g: Irgacure 184

Die Beschichtung erfolgt für die Ansätze A, B, C, D, D1, D2 und D3 unter den in Tabelle 7 angegebenen Giessgeschwindigkeiten und Lampenleistungswerten unter ansonsten gleichen Bedingungen (offener Giesser, 3 µm Spaltbreite, Trägerfolie Teijin K7, 14 µm Dicke, Trocknungstemperatur 85°C, Temperatur der UV-Walze 100°C, Lampenleistung 100% = 120 Watt/cm). Mit den auf diese Weise erhaltenen geträgerten cholesterischen Schichten wird nach Bestimmung der Schichtdicke der oben beschriebene Xyloltest durchgeführt. Ausserem bestimmt man die prozentuale Reflexion sowie das Reflexionsmaximum vor und nach der Xylolbehandlung. Die dabei ermittelten Ergebnisse sind in folgender Tabelle 8 zusammengefasst. Ausserdem bestimmt man die Veränderung des Reflexionsmaximums sowie stichpunktartig die Haftkraft der cholesterischen Schicht auf dem Träger. Die ermittelten Ergebnisse sind in Tabelle 9 zusammengefasst. Ausserdem ist in Tabelle 9 für jeden Versuchsansatz die Verweilzeit im UV-Härtungsbereich angegeben.

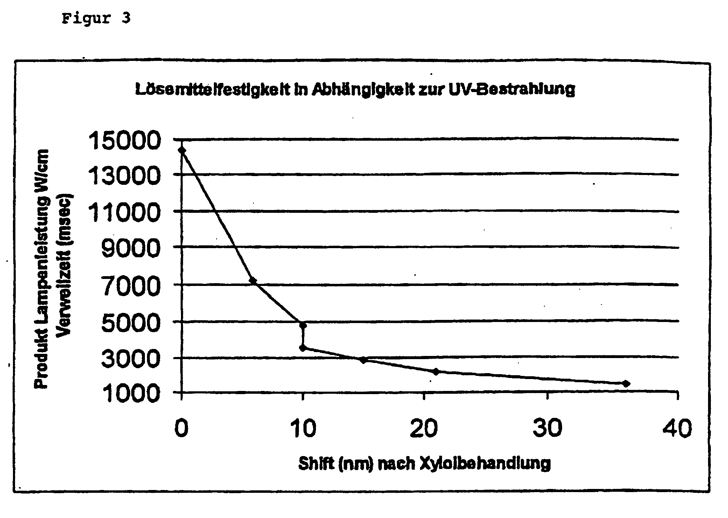

Aus den angegebenen Farbshift-Werten sowie dem Produkt aus Lampenleistung (in Watt/cm) und der Verweilzeit UV (in ms) lässt sich ein mathematischer Zusammenhang ermitteln. Die Korrelation zwischen beiden Parametern ist in Figur 3 dargestellt. Daraus ist ersichtlich, dass man durch gezielte Erhöhung des Produkts aus Lampenleistung und Verweilzeit die Farbshift-Beständigkeit cholesterischer Schichten und folglich der aus den Schichten hergestellten Pigmente gezielt verbessern kann.

**Tabelle 7:**

| Versuchsnummer | Giessgeschwindigkeit | Lampenleistung |
|---|---|---|
| A | 10 m/min | 100% |
| B | 20 m/min | 100% |
| C | 30 m/min | 100% |
| D | 40 m/min | 100% |
| D1 | 40 m/min | 80% |
| D2 | 40 m/min | 60% |
| D3 | 40 m/min | 40% |

**Tabelle 8:**

| Nummer | Giessgeschw. | Lampenleistung | Δ Reflexionsmaximum nach Xylolbehandlung [nm] |
|---|---|---|---|
| A | 10 m/min | 100% | + 1 |
| B | 20 m/min | 100% | - 6 |
| C | 30 m/min | 100% | -10 |
| D | 40 m/min | 100% | -10 |
| D1 | 40 m/min | 80% | -15 |
| D2 | 40 m/min | 60% | -21 |
| D3 | 40 m/min | 40% | -38 |

**Tabelle 9:**

| Nummer | Giessgeschwindigkeit/Verweilzeit UV | Lampenleistung | Δ Refl.max. (nm) | Haftung (cN) |
|---|---|---|---|---|
| A | 10 m/min / 120 msec | 100% / 120 W/cm | + 1 | > 7,5 |
| B | 20 m/min / 60 msec | 100% / 120 w/cm | - 6 | |
| C | 30 m/min / 40 msec | 100% / 120 W/cm | - 10 | |
| D | 40 m/min / 30 msec | 100% / 120 W/cm | - 10 | 3,7 |
| D1 | 40 m/min / 30 msec | 80% / 96 W/cm | - 15 | |
| D2 | 40 m/min / 30 msec | 60% / 72 W/cm | - 21 | |
| D3 | 40 m/min / 30 msec | 40% / 48 W/cm | - 36 | 0 |

## Patentansprüche

1. Cholesterisches Schichtmaterial, umfassend wenigstens eine dreidimensional vernetzte, orientierte cholesterische Schicht, **dadurch gekennzeichnet, dass** die vernetzte(n) cholesterische(n) Schicht(en) keinen Farbshift zeigt (zeigen) bei
a) Änderung der Temperatur im Bereich von -30°C bis 250°C;
b) Erwärmen auf Temperaturen im Bereich von 80 bis 160°C und gleichzeitiger Einwirkung eines Verdünnungsmittels; und/oder
c) 15-minütiger Behandlung bei 80°C in Xylol und anschliessendem Trocknen.

2. Cholesterisches Schichtmaterial nach Anspruch 1, **dadurch gekennzeichnet, dass** das Reflexionsmaximum der cholesterischen Schicht nach der Xylolbehandlung um nicht mehr als etwa 10 nm in den höheren oder niedrigeren Wellenlängenbereich verschiebbar ist.

3. Cholesterisches Schichtmaterial nach einem der vorherigen Ansprüche, **dadurch gekennzeichnet, dass** die cholesterische Schicht eine mittlere Trockenschichtdicke von weniger als etwa 5 µm aufweist.

4. Cholesterisches Schichtmaterial nach Anspruch 3, **dadurch gekennzeichnet, dass** die cholesterische Schicht eine mittlere Trockenschichtdicke von weniger als etwa 2 µm aufweist.

5. Cholesterisches Schichtmaterial nach Anspruch 3, **dadurch gekennzeichnet, dass** die cholesterische Schicht eine mittlere Trockenschichtdicke von kleiner oder gleich 1 µm aufweist.

6. Cholesterisches Schichtmaterial nach einem der vorherigen Ansprüche, **dadurch gekennzeichnet, dass** die cholesterische Schicht eine mittlere Trockenschichtdicke von mindestens einer Pitch-Höhe aufweist.

7. Cholesterisches Schichtmaterial nach einem der vorherigen Ansprüche, **dadurch gekennzeichnet, dass** es mehrere farbshiftbeständige cholesterische Schichten gleicher oder verschiedener Dicke und gleicher oder verschiedener chemischer Zusammensetzung umfasst.

8. Cholesterisches Pigment, umfassend wenigstens eine vernetzte orientierte cholesterische Schicht, mit einer mittleren Teilchengrösse im Bereich von 5 bis 50 µm und eine Dicke von 0,2 bis 5 µm, **dadurch gekennzeichnet, dass** die vernetzte(n) cholesterische(n) Schicht(en) keinen visuell erkennbaren Farbshift gemäß der Definition in Anspruch 1 oder 2 zeigt (zeigen).

9. Verfahren zur Herstellung eines cholesterischen Schichtmaterials nach Anspruch 1, **gekennzeichnet durch**:
a) Aufgiessen und dabei Orientieren einer cholesterischen Beschichtungsmasse, die wenigstens eine vernetzbare Substanz unfasst, auf einen Träger unter Ausbildung einer ersten cholesterischen Schicht, wobei der Träger im Wesentlichen chemisch inert gegenüber der aufzutragenden cholesterischen Schicht ist;
b) Trocknen und Vernetzung der aufgetragenen Schicht, wobei die Bedingungen so gewählt werden, dass die erhaltene Schicht keinen visuell erkennbaren Farbshift zeigt;
c) Entfernen des Schichtmaterials vom Träger, nachdem gegebenenfalls eine oder mehrere weitere orientierte, cholesterische Schichten auf die gemäss Schritt a) erhaltenen Schicht aufgetragen wurden.

10. Verfahren nach Anspruch 9, **dadurch gekennzeichnet, dass** ein Träger eingesetzt wird, der die Orientierung der darauf aufgegossenen cholesterischen Schicht während der Trocknung und Härtung nicht stört.

11. Verfahren nach einem der Ansprüche 9 und 10, **dadurch gekennzeichnet, dass** der Träger gegenüber der auf ihn aufgegossenen, getrockneten und vernetzten ersten cholesterischen Schicht eine Haftkraft von weniger als etwa 1 cN besitzt.

12. Verfahren nach einem der Ansprüche 9 bis 11, **dadurch gekennzeichnet, dass** man ein Schichtmaterial, umfassend mehrere cholesterische Schichten, herstellt, wobei die zweite Schicht im Verbund mit gegebenenfalls weiteren Schichten selektiv von der ersten; auf dem Träger befindlichen Schicht entfernbar ist.

13. Verfahren nach einem der Ansprüche 9 bis 12, **dadurch gekennzeichnet, dass** der Träger ausgewählt ist unter einem Kunststoff-, Metall-, Glas- oder Keramikträger.

14. Verfahren nach Anspruch 13, **dadurch gekennzeichnet, dass** der Kunststoffträger eine Releaseschicht aus vernetztem, vorzugsweise orientiertem, cholesterischem Material umfasst, auf welche die erste cholesterische Schicht aufgegossen wird.

15. Verfahren nach Anspruch 14, **dadurch gekennzeichnet, dass** die Haftkraft zwischen Kunststoffträger und Releaseschicht mindestens etwa zweifach grösser ist als die Haftkraft zwischen Releaseschicht und erster cholesterischer Schicht.

16. Verfahren nach einem der Ansprüche 9 bis 15, **dadurch gekennzeichnet, dass** die Beschichtungsmassen für die cholesterische(n) Schicht(en) und der Releaseschicht unabhängig voneinander eine Viskosität im Bereich von etwa 1 bis 50 mPas besitzen und die Beschichtungsgeschwindigkeit im Bereich von etwa 1 bis 800 m/min liegt.

17. Verfahren nach einem der Ansprüche 9 bis 16, **dadurch gekennzeichnet, dass** die Vernetzung der cholesterischen Schicht(en) und der gegebenfalls vorliegenden cholesterischen Releaseschicht durch Elektronenstrahlen oder UV-Strahlung bei gleichzeitigem Erwärmen der zu härtenden Schicht erfolgt, wobei die Strahlerleistung im Bereich von etwa 50 bis 200 Watt/cm liegt.

18. Verfahren nach Anspruch 17, **dadurch gekennzeichnet, dass** die Schichttemperatur während der Strahlungshärtung mindestens 60°C, insbesondere mindestens 80°C, vorzugsweise mindestens 90°C, beträgt.

19. Verfahren nach einem der Ansprüche 9 bis 18, **dadurch gekennzeichnet, dass** man auf die zuletzt aufgetragene cholesterische Schicht eine weitere Trägerfolie aufbringt und die eine oder mehreren cholesterischen Schichten im Verbund vom Träger entfernt.

20. Verfahren nach einem der Ansprüche 9 bis 18, **dadurch gekennzeichnet, dass** man eine oder mehreren cholesterischen Schichten vom Träger durch Abblasen mit Druckluft, Wasserstrahl, Wasserdampf oder mit Hilfe einer Rakel entfernt und zu Pigmenten vermahlt.

21. Zusammensetzung, enthaltend wenigstens ein cholesterisches Pigment nach Anspruch 8.

22. Verwendung von Schichtmaterial nach einem der Ansprüche 1 bis 7 oder von Pigmenten nach Anspruch 8 im Fahrzeug- oder Fahrzeugzubehörsektor, im EDV-, Freizeit-, Sport- und Spielsektor, in optischen Bauelementen, wie Polarisatoren oder Filter, im Kosmetikbereich, im Textil- , Leder- oder Schmuckbereich, bei Geschenkartikeln, bei Schreibutensilien, oder auf Brillengestellen, im Bausektor, im Haushaltssektor, bei Drukkerzeugnissen aller Art, bei der Herstellung von Lacken oder Farben, zur fälschungserschwerenden Bearbeitung von Gegenständen.

23. Verwendung einer Zusammensetzung nach Anspruch 21 zur Beschichtung von Gebrauchsgegenständen oder zur Lackierung von Fahrzeugen.

24. Polarisator, umfassend ein Schichtmaterial nach einem der Ansprüche 1 bis 7, gegebenenfalls aufgetragen auf eine Trägerfolie.

25. Breitbandpolarisator, umfassend ein Schichtmaterial nach einem der Ansprüche 1 bis 7 mit einer Anzahl von 3 bis 20 cholesterischer Schichten mit aufeinander abgestimmten Reflexionsmaxima, wobei der Polarisator eine Gesamtdicke (ohne Trägerfolie) im Bereich von etwa 2 bis 50 µm besitzt.

## Claims

1. A cholesteric layered material comprising at least one three-dimensionally crosslinked, aligned cholesteric layer, wherein the crosslinked cholesteric layer(s) does (do) not exhibit a color shift on
a) a change in the temperature in the range from -30°C to 250°C;
b) warming to temperatures in the range from 80 to 160°C with simultaneous exposure to a diluent; and/or
c) treatment for 15 minutes at 80°C in xylene followed by drying.

2. A cholesteric layered material as claimed in claim 1, wherein the reflection maximum of the cholesteric layer after the xylene treatment can be shifted by not more than about 10 nm into the higher or lower wavelength region.

3. A cholesteric layered material as claimed in one of the preceding claims, wherein the cholesteric layer has a mean dry layer thickness of less than about 5 µm.

4. A cholesteric layered material as claimed in claim 3, wherein the cholesteric layer has a mean dry layer thickness of less than about 2 µm.

5. A cholesteric layered material as claimed in claim 3, wherein the cholesteric layer has a mean dry layer thickness of not more than 1 µm.

6. A cholesteric layered material as claimed in one of the preceding claims, wherein the cholesteric layer has a mean dry layer thickness of at least one pitch height.

7. A cholesteric layered material as claimed in one of the preceding claims, which comprises a plurality of color shift-stable cholesteric layers of identical or different thickness and identical or different chemical composition.

8. A cholesteric pigment comprising at least one crosslinked, aligned cholesteric layer having a mean particle size in the range from 5 to 50 µm and a thickness of from 0.2 to 5 µm, wherein the crosslinked cholesteric layer(s) exhibits (exhibit) no visually evident color shift as per the definition in claim 1 or 2.

9. A process for the production of a cholesteric layered material as claimed in claim 1, which comprises:
a) casting and simultaneous alignment of a cholesteric coating composition comprising at least one crosslinkable substance onto a support with formation of a first cholesteric layer, where the support is essentially chemically inert to the cholesteric layer to be applied;
b) drying and crosslinking of the applied layer, where the conditions are selected in such a way that the resultant layer exhibits no visually evident color shift;
c) removal of the layered material from the support after one or more further aligned cholesteric layers have, if desired, been applied to the layer obtained in accordance with step a).

10. A process as claimed in claim 9, wherein a support is employed which does not adversely affect the alignment of the cholesteric layer cast thereon during drying and curing.

11. A process as claimed in one of claims 9 and 10, wherein the support has an adhesive strength of less than about 1 cN to the dried and crosslinked first cholesteric layer cast thereon.

12. A process as claimed in one of claims 9 to 11, wherein a layered material comprising a plurality of cholesteric layers is produced, where the second layer can be removed selectively from the first layer on the support as a composite with any further layers.

13. A process as claimed in one of claims 9 to 12, wherein the support is selected from plastic, metal, glass and ceramic supports.

14. A process as claimed in claim 13, wherein the plastic support comprises a release layer of crosslinked, preferably aligned, cholesteric material onto which the first cholesteric layer is cast.

15. A process as claimed in claim 14, wherein the adhesion between plastic support and release layer is at least about twice the adhesion between release layer and first cholesteric layer.

16. A process as claimed in one of claims 9 to 15, wherein the coating compositions for the cholesteric layer(s) and the release layer independently of one another have a viscosity in the range from about 1 to 50 mPas, and the coating rate is in the range from about 1 to 800 m/min.

17. A process as claimed in one of claims 9 to 16, wherein the crosslinking of the cholesteric layer(s) and of any cholesteric release layer present is carried out by electron beams or UV radiation with simultaneous warming of the layer to be cured, where the emitter power is in the range from about 50 to 200 watts/cm.

18. A process as claimed in claim 17, wherein the layer temperature during the radiation curing is at least 60°C, in particular at least 80°C, preferably at least 90°C.

19. A process as claimed in one of claims 9 to 18, wherein a further support film is applied to the cholesteric layer applied last, and the one or more cholesteric layer(s) is (are) removed from the support as a composite.

20. A process as claimed in one of claims 9 to 18, wherein one or more cholesteric layer(s) is (are) removed from the support by blasting with compressed air, a water jet, steam or with the aid of a knife coater and ground to give pigments.

21. A composition comprising at least one cholesteric pigment as claimed in claim 8.

22. The use of layered material as claimed in one of claims 1 to 7 or of a pigment as claimed in claim 8 in the motor vehicle or motor vehicle accessory sector, in the computer, leisure, sport and toy sector, in optical components, such as polarizers or filters, in the cosmetics area, in the textiles, leather or jewelry area, in gift articles, in writing implements or on spectacle frames, in the construction sector, in the domestic sector, in print products of all types, in the production of paints and coatings, for the anticounterfeiting treatment of articles.

23. The use of a composition as claimed in claim 21 for the coating of utility articles or for the painting of motor vehicles.

24. A polarizer comprising a layered material as claimed in one of claims 1 to 7, if desired applied to a support film.

25. A broad-band polarizer comprising a layered material as claimed in one of claims 1 to 7 having a number of from 3 to 20 cholesteric layers with reflection maxima matched to one another, where the polarizer has a total thickness (without support film) in the range from about 2 to 50 µm.

## Revendications

1. Matériau multicouche cholestérique, comprenant au moins une couche cholestérique orientée à réticulation tridimensionelle, **caractérisé en ce que** la ou les couches réticulées cholestériques ne présentent pas de variations de couleur en cas de
a) changement de la température dans une gamme allant de -30°C à 250°C ;
b) chauffage à des températures allant de 80°C à 160°C et d'une action simultanée d'un solvant ; et/ou de
c) traitement d'une durée de 15 min à 80°C dans du xylène et d'un séchage ultérieur.

2. Matériau multicouche cholestérique selon la revendication 1, **caractérisé en ce que** le pic de réflexion de la couche cholestérique après le traitement au xylène ne peut pas être décalé de plus d'environ 10 nm dans la gamme de longueurs d'ondes supérieure ou inférieure.

3. Matériau multicouche cholestérique selon l'une quelconque des revendications précédentes, **caractérisé en ce que** la couche cholestérique présente une épaisseur de couche sèche moyenne inférieure à environ 5 µm.

4. Matériau multicouche cholestérique selon la revendication 3, **caractérisé en ce que** la couche cholestérique présente une épaisseur de couche sèche moyenne inférieure à environ 2 µm.

5. Matériau multicouche cholestérique selon la revendication 3, **caractérisé en ce que** la couche cholestérique présente une épaisseur de couche sèche moyenne inférieure ou égale à 1 µm.

6. Matériau multicouche cholestérique selon l'une quelconque des revendications précédentes, **caractérisé en ce que** la couche cholestérique présente une épaisseur de couche sèche moyenne au moins égale à une hauteur de pas.

7. Matériau multicouche cholestérique selon l'une quelconque des revendications précédentes, **caractérisé en ce qu'**il comprend plusieurs couches cholestériques résistantes aux variations de couleur d'une épaisseur égale ou différente et d'une composition chimique identique ou différente.

8. Pigment cholestérique comprenant au moins une couche cholestérique réticulée orientée, présentant une granulométrie moyenne allant de 5 µm à 50 µm et une épaisseur allant de 0,2 µm à 5 µm, **caractérisé en ce que** la ou les couches réticulées cholestériques ne présentent pas de variations de couleur décelables visuellement selon la définition dans la revendication 1 ou 2.

9. Procédé de préparation d'un matériau multicouche cholestérique selon la revendication 1, **caractérisé par** :
a) le coulage et l'orientation simultanée d'une masse cholestérique de revêtement, qui comprend au moins une substance réticulable, sur un support, en formant une première couche cholestérique, le support étant essentiellement inerte chimiquement envers la couche cholestérique à déposer ;
b) le séchage et la réticulation de la couche déposée, les conditions étant choisies de manière à ce que la couche obtenue ne présente pas de variations de couleur visuellement décelables ;
c) le retrait du matériau multicouche hors du support après avoir éventuellement déposé une ou plusieurs autres couches cholestériques orientées sur la couche obtenue selon l'étape a).

10. Procédé selon la revendication 9, **caractérisé en ce que** l'on utilise un support qui ne gène pas l'orientation de la couche cholestérique coulée sur celui-ci pendant le séchage et le durcissement.

11. Procédé selon l'une quelconque des revendications 9 ou 10, **caractérisé en ce que** le support présente une adhérence envers la première couche cholestérique coulée sur celui-ci, séchée et réticulée, qui est inférieure à environ 1 cN.

12. Procédé selon l'une quelconque des revendications 9 à 11, **caractérisé en ce que** l'on fabrique un matériau multicouche comprenant plusieurs couches cholestériques, la deuxième couche adhérant éventuellement à d'autres couches pouvant être retirée conjointement avec celles-ci de manière sélective de la première couche présente sur le support.

13. Procédé selon l'une quelconque des revendications 9 à 12, **caractérisé en ce que** l'on choisit le support parmi un support de matière plastique, de métal, de verre ou de céramique.

14. Procédé selon la revendication 13, **caractérisé en ce que** le support de matière plastique comprend une couche anti-adhésive composée d'une matière cholestérique réticulée, de préférence orientée, sur laquelle on coule la première couche cholestérique.

15. Procédé selon la revendication 14, **caractérisé en ce que** l'adhérence entre le support de matière plastique et la couche anti-adhésive est au moins environ deux fois supérieure à l'adhérence entre la couche anti-adhésive et la première couche cholestérique.

16. Procédé selon l'une quelconque des revendications 9 à 15, **caractérisé en ce que** les masses de revêtement pour la ou les couches cholestériques et la couche anti-adhésive présentent, indépendamment les unes des autres, une viscosité allant d'environ 1 mPa.s à 50 mPa.s et **en ce que** la vitesse de revêtement va d'environ 1 m/min à 800 m/min.

17. Procédé selon l'une quelconque des revendications 9 à 16, **caractérisé en ce que** l'on réalise la réticulation de la ou des couches cholestériques et de la couche cholestérique anti-adhésive éventuellement présente au moyen de rayons électroniques ou de rayons UV et d'un chauffage simultané de la couche à durcir, la puissance du rayonnement allant d'environ 50 Watt/cm² à 200 Watt/cm².

18. Procédé selon la revendication 17, **caractérisé en ce que** la température de la couche pendant le durcissement par rayonnement est d'au moins 60°C, en particulier d'au moins 80°C, de préférence d'au moins 90°C.

19. Procédé selon l'une quelconque des revendications 9 à 18, **caractérisé en ce que** l'on dépose un autre film support sur la dernière couche cholestérique déposée et que l'on retire la ou les couches cholestériques conjointement du support.

20. Procédé selon l'une quelconque des revendications 9 à 18, **caractérisé en ce que** l'on retire une ou plusieurs couches cholestériques du support au moyen d'un soufflage avec de l'air comprimé, d'un jet d'eau, de vapeur d'eau ou à l'aide d'une racle et on la ou on les broie pour former des pigments.

21. Composition contenant au moins un pigment cholestérique selon la revendication 8.

22. Utilisation d'un matériau multicouche selon l'une quelconque des revendications 1 à 7, ou de pigments selon la revendication 8 dans le domaine de l'automobile ou des accessoires pour automobiles, de l'informatique, des loisirs, du sport, des jeux, dans des composants optiques tels que les polariseurs ou les filtres, dans le domaine de la cosmétique, du textile, du cuir ou des bijoux, des articles de cadeau, des articles de papeterie ou sur des montures de lunettes, dans le domaine du bâtiment, pour des utilisations domestiques, des supports imprimés de tout type, pour la fabrication de vernis ou de peintures, pour le traitement d'objets les rendant infalsifiables.

23. Utilisation d'une composition selon la revendication 21 pour le revêtement d'objets d'usage courant ou pour le vernissage de véhicules.

24. Polariseur comprenant un matériau multicouche selon l'une quelconque des revendications 1 à 7, éventuellement déposé sur un film support.

25. Polariseur à large bande comprenant un matériau multicouche selon l'une quelconque des revendications 1 à 7 comprenant 3 à 20 couches cholestériques avec des pics de réflexion ajustés les uns aux autres, le polariseur présentant une épaisseur totale (sans film support) d'environ 2 µm à 50 µm.
